(19) Europäisches Patentamt / European Patent Office / Office européen des brevets

(11) **EP 4 296 990 B1**

(12) **EUROPEAN PATENT SPECIFICATION**

(45) Date of publication and mention of the grant of the patent:
**21.01.2026 Bulletin 2026/04**

(21) Application number: **21927165.7**

(22) Date of filing: **24.02.2021**

(51) International Patent Classification (IPC):
**G08G 1/04** (2006.01)   **G08G 1/16** (2006.01)
**B60L 53/14** (2019.01)   **G08G 1/01** (2006.01)
**G08G 1/0962** (2006.01)   **G08G 1/0967** (2006.01)
**G08G 5/00** (2025.01)   **B64U 10/13** (2023.01)

(52) Cooperative Patent Classification (CPC):
**G08G 1/012; G08G 1/04; G08G 1/0962; G08G 1/096791; G08G 1/167;** G08G 5/26; G08G 5/55; G08G 5/57; G08G 5/723; Y02T 10/70; Y02T 10/7072; Y02T 90/14

(86) International application number:
**PCT/CN2021/077690**

(87) International publication number:
**WO 2022/178720 (01.09.2022 Gazette 2022/35)**

(54) **ASSISTED DRIVING METHOD, STOP RECESS, CHIP, ELECTRONIC DEVICE, AND STORAGE MEDIUM**

UNTERSTÜTZTES ANTRIEBSVERFAHREN, STOPPVERTIEFUNG, CHIP, ELEKTRONISCHE VORRICHTUNG UND SPEICHERMEDIUM

PROCÉDÉ DE CONDUITE ASSISTÉE, ÉVIDEMENT D'ARRÊT, PUCE, DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2023 Bulletin 2023/52**

(73) Proprietor: **Shenzhen Yinwang Intelligent Technologies Co., Ltd.**
**Shenzhen, Guangdong 518129 (CN)**

(72) Inventors:
• **ZHOU, Qibin**
 **Shenzhen, Guangdong 518129 (CN)**
• **HONG, Feng**
 **Shenzhen, Guangdong 518129 (CN)**

• **CHEN, Xi**
 **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A1- 3 246 776**   CN-A- 105 512 628
CN-A- 107 247 465   CN-A- 107 672 817
CN-A- 107 782 308   CN-A- 111 186 594
CN-A- 111 627 256   CN-A- 111 627 256
CN-A- 112 093 050   US-A1- 2016 244 187
US-A1- 2018 229 852   US-A1- 2020 130 864
US-A1- 2020 148 389   US-A1- 2020 407 057

EP 4 296 990 B1

## Description

### TECHNICAL FIELD

This application relates to the field of intelligent driving, and specifically, to an assisted driving method, a parking slot, a chip, an electronic device, and a computer-readable storage medium.

### BACKGROUND

In a traffic scenario, traffic accidents are often caused because a blind spot blocks a driver's field of view or a sensing range of a sensor configured on a vehicle. For example, in an urban traffic scenario, when a vehicle is blocked by another vehicle, building, or facility, a sensor configured for a driver or a vehicle cannot obtain enough environment information, and therefore the driver cannot make a timely and reasonable decision, causing a traffic accident. When a side vehicle blocks the line of sight, due to existence of a blind spot, the driver may not have time to brake when facing a pedestrian or a rider who suddenly rushes out, which may cause a traffic accident. When a vehicle turns right at an intersection, pedestrians and riders on the right non-motor lane cannot be observed at a specific position due to existence of a blind spot in the rear-view mirror, which may also cause a traffic accident. A blind spot may also affect traffic efficiency. For example, when following a high vehicle during driving, a driver may not be able to observe a status of a traffic light in front of the vehicle. As a result, the driver cannot make the most reasonable driving decision. When a plurality of lanes are travelable, because a driver usually cannot observe a status of each lane ahead, the driver cannot make the most reasonable lane selection decision. When a driver is driving on a two-way lane and a vehicle ahead is high, if the driver needs to overtake, the driver may need to frequently change to the opposite lane to try to overtake. If the driver finds that there is no vehicle on the opposite lane and a condition for overtaking is met, the driver performs overtaking, which affects traffic efficiency.

In a conventional technology, for this case, a method of adding a liquid crystal display to the rear of a vehicle is proposed. The vehicle ahead displays information about traffic ahead on the display of the vehicle ahead in real time, so that a driver of the rear vehicle can observe whether a pedestrian is crossing a road ahead, whether a condition for overtaking is met, and the like. However, this method is costly and difficult to popularize. In addition, it is difficult to install a display on a trunk of a passenger car, and it is not easy to be accepted by consumers.

Document CN 111627256A relates to an unmanned aerial vehicle (UAV) control method that comprises the steps of: establishing a connection with a UAV using a wireless communication mode; after receiving a take-off control instruction for the UAV, determining whether the take-off conditions are met based on the current take-off environment information, wherein the current take-off environment information includes at least one of the following: speed information of the vehicle carrying the UAV and position information of the vehicle; if the current take-off environment information does not meet the take-off conditions, outputting a corresponding take-off prompt; and if the current take-off environment information meets the take-off conditions, sending a take-off control command to the UAV to initiate take-off.

Document CN 105512628A relates to a vehicle environment sensing system based on a UAV. The sensing system comprises the UAV and an earth station. The UAV is connected to the vehicle through a mooring rope, the UAV captures the road surface, and a video image is transmitted to the earth station. The earth station, located in the target vehicle, processes the video image to obtain vehicle environment information and calculates flight control parameters, which are then sent to the UAV, enabling the UAV and the vehicle to move together.

Document EP 3246776A1 relates to a UAV housing apparatus comprising a mounting component configured to attach to a vehicle; a landing connection component configured to form a connection with the UAV, preventing detachment from the UAV housing apparatus; and a cover configured to at least partially enclose the UAV when it is connected to the landing connection component.

Document US 2016/244187A1 relates to a pre-flight self-test method for UAVs. A controller instructs a UAV docked to a landing perch to perform a pre-flight test operation as part of a pre-flight test routine. The controller receives sensor data associated with the test operation from one or more force sensors of the landing perch in response to the UAV performing the test. The controller determines whether the sensor data is within an acceptable range and, based on the determination that the UAV has passed the pre-flight test, initiates the launch of the UAV from the landing perch.

Document US 2020/130864A1 relates to a method for autonomously operating an unmanned aerial system (UAS) over long durations. The UAS autonomously takes off from a take-off/landing-charging station and executes a mission that includes data acquisition in a defined observation area. Upon completion, the UAS autonomously returns to a target landing-charging station, performs a precision landing, and recharges. After recharging, the UAS is ready for its next mission. When landed, the UAS autonomously transmits mission data to the landing-charging station for local or cloud-based data processing.

Document US 2020/407057A1 relates to a method for the secure transportation and safe deployment of UAVs. The method includes performing a UAV preflight procedure, which involves detecting UAV startup sounds from sound signals received by a microphone within the housing, verifying synchronized propeller rotation, ensuring no obstructions are present above the housing based on range finder signals, and releasing the UAV upon successful completion of the preflight procedure.

## SUMMARY

In view of the foregoing content, it is necessary to provide an assisted driving method, an apparatus, a computer device, and a computer-readable storage medium, so as to collect road conditions ahead by using a flying apparatus that communicates with a vehicle, and send the road conditions back to the vehicle for display. The present invention is defined by the appended claims. In the following, parts of the description and drawings referring to former embodiments which do not necessarily comprise all features to implement embodiments of the claimed invention are understood to not represent embodiments of the invention but to relate to examples useful for understanding the embodiments of the invention.

A first aspect of the embodiments of this application discloses an assisted driving method, according to claim 1.

According to the claimed invention, the flying apparatus is used to obtain the road condition image around the vehicle in real time, and transmit the road condition image to the vehicle, so as to improve driving safety of the vehicle and road traffic efficiency.

In a possible implementation, the controlling the flying apparatus to enter a self-test mode when power of the flying apparatus meets a preset power requirement and a vehicle speed of a vehicle meets a preset vehicle speed requirement includes: when remaining power of the flying apparatus is greater than preset power, the vehicle speed of the vehicle is lower than a preset vehicle speed, and communication between the flying apparatus and the vehicle is normal, controlling the flying apparatus to enter the self-test mode; or when remaining power of the flying apparatus is greater than preset power, the vehicle speed of the vehicle is lower than a preset vehicle speed, a rainfall in a flight environment of the flying apparatus is less than a preset rainfall, and communication between the flying apparatus and the vehicle is normal, controlling the flying apparatus to enter the self-test mode.

According to this technical solution, the flying apparatus enters a take-off preparation phase only when the flying apparatus receives the startup instruction and a preset take-off policy is met, so as to prevent the flying apparatus from flying in an inappropriate flight condition.

According to the claimed invention, the flying apparatus includes a plurality of rotary wings, and that the flying apparatus succeeds in the self-test includes: each of the rotary wings rotates at a preset rotation speed in a take-off preparation mode.

According to this technical solution, when the flying apparatus enters the take-off preparation phase, self-test is performed on the rotary wings, so as to avoid a flight exception of the flying apparatus.

In a possible implementation, the assisted driving method further includes: when the flying apparatus and/or the vehicle meet/meets a preset landing condition, controlling the flying apparatus to enter a return-for-landing mode, where the preset landing condition includes at least one of the following: the flying apparatus receives a return instruction; the remaining power of the flying apparatus is less than a preset threshold; the vehicle speed of the vehicle is higher than the preset vehicle speed for a first preset time; the rainfall in the flight environment of the flying apparatus is greater than the preset rainfall for a second preset time; and a communication exception occurs between the flying apparatus and the vehicle for a third preset time.

According to this technical solution, when a preset return policy is met during flight of the flying apparatus, the flying apparatus may be controlled to return for landing.

In a possible implementation, the vehicle is provided with a parking slot for parking the flying apparatus, and the controlling the flying apparatus to enter a return-for-landing mode includes: controlling the flying apparatus to track a center point of the parking slot by using the camera, and adjusting a speed and a position of the flying apparatus in an X-axis direction and a speed and a position of the flying apparatus in a Y-axis direction, so that the center point of the parking slot is in a same vertical direction as a center point of the flying apparatus; and adjusting a flight height of the flying apparatus to land in the parking slot.

According to this technical solution, in a process of returning for landing, the flying apparatus lands in the parking slot by tracking the center point of the parking slot and adjusting the flight height.

According to the claimed invention, the vehicle is provided with a parking slot for parking the flying apparatus, an air blowing inlet is provided on a side wall of the parking slot, and the assisted driving method further includes: when the flying apparatus fails in the self-test, blowing air to the flying apparatus by using the air blowing inlet; or when the flying apparatus succeeds in the self-test within a preset blowing time, obtaining the vehicle speed information of the vehicle; or when the flying apparatus still fails in the self-test within the preset blowing time, outputting preset prompt information to the vehicle.

According to this technical solution, when the flying apparatus fails in the self-test, air is blown to the flying apparatus by using a preset error correction policy. When the error correction succeeds, the flying apparatus may take off normally; or when the error correction fails, the driver is reminded to assist in resolving the problem.

In a possible implementation, when the flying apparatus succeeds in the self-test, the parking slot is switched from a locked state to a loosened state.

According to this technical solution, when the flying apparatus succeeds in the self-test, the parking slot releases the flying apparatus, so that the flying apparatus can take off.

In a possible implementation, a vehicle coordinate system is defined for the vehicle, and the obtaining information about a position of the flying apparatus relative to the vehicle includes: obtaining a first actual distance of the flying apparatus relative to a coordinate origin of the vehicle coordinate system in an X-axis direction, a second actual distance of the flying apparatus relative to a coordinate origin of the vehicle coordinate system in a Y-axis direction, and a third actual distance of the flying apparatus relative to a coordinate origin of the vehicle coordinate system in a Z-axis direction.

In a possible implementation, a first target distance relative to the coordinate origin of the vehicle coordinate system in the X-axis direction, a second target distance relative to the coordinate origin of the vehicle coordinate system in the Y-axis direction, and a third target distance relative to the coordinate origin of the vehicle coordinate system in the Z-axis direction are set for the flying apparatus, and the controlling, based on the vehicle speed information and the position information, the flying apparatus to fly includes: controlling, based on the vehicle speed information, a difference between the first target distance and the first actual distance, a difference between the second target distance and the second actual distance, and a difference between the third target distance and the third actual distance, the flying apparatus to fly.

According to this technical solution, in the vehicle coordinate system, a target position and an actual position of the flying apparatus are obtained, and a flight distance of the flying apparatus relative to the vehicle is controlled based on the vehicle speed and a difference between the target position and the actual position.

In a possible implementation, the assisted driving method further includes: setting the first target distance according to a vehicle speed, an acceleration, and a steering wheel rotation angle that are of the vehicle, where the first target distance is positively correlated with the vehicle speed and the acceleration of the vehicle, and the first target distance is negatively correlated with the steering wheel rotation angle of the vehicle; setting the second target distance according to a preset time constant and the vehicle speed, the acceleration, and the steering wheel rotation angle that are of the vehicle, where the second target distance is positively correlated with the vehicle speed and the acceleration of the vehicle, and the second target distance is negatively correlated with the steering wheel rotation angle of the vehicle; and when it is determined, based on the road condition image, that there is a height limit sign in front of the vehicle, setting the third target distance according to a height marked by the height limit sign and a preset safe height.

According to this technical solution, the distances of the flying apparatus relative to the vehicle on the X axis and the Y axis can be determined based on the vehicle speed, the acceleration, and the steering wheel rotation angle that are of the vehicle, and the distance of the flying apparatus relative to the vehicle on the Z axis can be determined based on the height limit sign and the preset safe height.

In a possible implementation, the assisted driving method further includes: when it is determined, based on the road condition image, that there is a height limit sign and an obstacle vehicle in front of the vehicle, setting the third target distance according to the height marked by the height limit sign and a height of the obstacle vehicle; or when it is determined, based on the road condition image, that there is an obstacle vehicle in front of the vehicle, setting the third target distance according to a height of the obstacle vehicle and the preset safe height; or when it is determined, based on the road condition image, that there is neither a height limit sign nor an obstacle vehicle in front of the vehicle, setting the third target distance as the preset safe height.

A second aspect not part of the claimed invention, discloses an assisted driving method, including: sending a startup instruction to a flying apparatus, where the startup instruction is used to start the flying apparatus, and a camera is disposed on the flying apparatus; receiving a road condition image that is transmitted by the flying apparatus and that is shot by the camera; performing coordinate transformation on the road condition image, and displaying the road condition image on an in-vehicle display apparatus of a vehicle; obtaining information about a position of the flying apparatus relative to the vehicle; and controlling, based on the position information, the flying apparatus to fly.

According to this technical solution, the flying apparatus is used to obtain the road condition image around the vehicle in real time, and transmit the road condition image to the vehicle; and the vehicle performs flight control on the flying apparatus, and performs coordinate transformation on the received road condition image, so as to display the road condition image on the in-vehicle display apparatus, thereby improving driving safety of the vehicle and road traffic efficiency.

In a possible implementation, a vehicle coordinate system is defined for the vehicle, and the obtaining information about a position of the flying apparatus relative to the vehicle includes: obtaining a first actual distance of the flying apparatus relative to a coordinate origin of the vehicle coordinate system in an X-axis direction, a second actual distance of the flying apparatus relative to a coordinate origin of the vehicle coordinate system in a Y-axis direction, and a third actual distance of the flying apparatus relative to a coordinate origin of the vehicle coordinate system in a Z-axis direction.

In a possible implementation, a first target distance relative to the coordinate origin of the vehicle coordinate system in the X-axis direction, a second target distance relative to the coordinate origin of the vehicle coordinate system in the Y-axis direction, and a third target distance relative to the coordinate origin of the vehicle coordinate system in the Z-axis direction are set for the flying apparatus, and the controlling, based on the position information, the flying apparatus to fly includes: determining a control value for the flying apparatus in the X-axis direction based on a difference between the first target distance and the first actual distance, so that the difference between the first target distance and the first actual distance falls within a first preset range; determining a control value for the flying apparatus in the Y-axis direction based on a difference between the second target distance and the second actual distance, so that the difference between the second target distance and the second actual distance falls within a second preset range; and determining a control value for the flying apparatus in the Z-axis direction based on a difference between the third target distance and the third actual distance, so that the difference between the third target distance and the third actual distance falls within a third preset range.

According to this technical solution, in the vehicle coordinate system, a target position and an actual position of the flying apparatus are obtained, and the control values for the flying apparatus on an X axis, a Y axis, and a Z axis are determined based on a difference between the target position and the actual position, so as to control a flight distance of the flying apparatus relative to the vehicle.

In a possible implementation, the assisted driving method further includes: setting the first target distance according to a vehicle speed, an acceleration, and a steering wheel rotation angle that are of the vehicle, where the first target distance is positively correlated with the vehicle speed and the acceleration of the vehicle, and the first target distance is negatively correlated with the steering wheel rotation angle of the vehicle; setting the second target distance according to a preset time constant and the vehicle speed, the acceleration, and the steering wheel rotation angle that are of the vehicle, where the second target distance is positively correlated with the vehicle speed and the acceleration of the vehicle, and the second target distance is negatively correlated with the steering wheel rotation angle of the vehicle; and when it is determined, based on the road condition image, that there is a height limit sign in front of the vehicle, setting the third target distance according to a height marked by the height limit sign and a preset safe height.

According to this technical solution, the distances of the flying apparatus relative to the vehicle on the X axis and the Y axis can be determined based on the vehicle speed, the acceleration, and the steering wheel rotation angle that are of the vehicle, and the distance of the flying apparatus relative to the vehicle on the Z axis can be determined based on the height limit sign and the preset safe height.

In a possible implementation, the assisted driving method further includes: when it is determined, based on the road condition image, that there is a height limit sign and an obstacle vehicle in front of the vehicle, setting the third target distance according to the height marked by the height limit sign and a height of the obstacle vehicle; or when it is determined, based on the road condition image, that there is an obstacle vehicle in front of the vehicle, setting the third target distance according to a height of the obstacle vehicle and the preset safe height; or when it is determined, based on the road condition image, that there is neither a height limit sign nor an obstacle vehicle in front of the vehicle, setting the third target distance as the preset safe height.

In a possible implementation, a flying apparatus coordinate system is defined for the flying apparatus, and the performing coordinate transformation on the road condition image includes: performing first coordinate transformation on the road condition image to obtain the road condition image in the flying apparatus coordinate system; and performing second coordinate transformation on the road condition image in the flying apparatus coordinate system, to obtain a road condition image in the vehicle coordinate system.

According to this technical solution, coordinate transformation may be performed on a road condition image shot by a camera, to obtain the road condition image in the vehicle coordinate system, so as to display the road condition image on an in-vehicle display device.

In a possible implementation, the flying apparatus is further provided with a wireless module, and the obtaining a first actual distance of the flying apparatus relative to a coordinate origin of the vehicle coordinate system in an X-axis direction, a second actual distance of the flying apparatus relative to a coordinate origin of the vehicle coordinate system in a Y-axis direction, and a third actual distance of the flying apparatus relative to a coordinate origin of the vehicle coordinate system in a Z-axis direction includes: measuring a radio signal strength of the wireless module, and obtaining, based on the radio signal strength, a first actual distance of the flying apparatus relative to the coordinate origin of the vehicle coordinate system in the X-axis direction, a second actual distance of the flying apparatus relative to the coordinate origin of the vehicle coordinate system in the Y-axis direction, and a third actual distance of the flying apparatus relative to the coordinate origin of the vehicle coordinate system in the Z-axis direction.

According to this technical solution, the actual position of the flying apparatus may be obtained, through measurement, in a radio signal positioning manner.

In a possible implementation, the vehicle is provided with a parking slot for parking the flying apparatus, the parking slot is provided with a fastener and a first circuit, and the assisted driving method further includes: when it is detected that the first circuit is in a connected state, determining that the flying apparatus has landed in the parking slot; controlling the fastener to lock the flying apparatus in the parking slot; and when it is detected that the fastener successfully locks the flying apparatus, outputting landing success prompt information.

According to this technical solution, it may be determined, by determining whether the first circuit is connected and whether the fastener successfully locks the flying apparatus, whether the flying apparatus successfully lands in the parking slot.

In a possible implementation, the assisted driving method further includes: when the flying apparatus successfully lands, power of the flying apparatus is less than first preset power, and power of the vehicle is greater than second preset power, charging the flying apparatus in a first charging mode; or when a charging control instruction is received, charging the flying apparatus according to the charging control instruction, where the charging control instruction includes the first charging mode or a second charging mode, and a charging current of the second charging mode is greater than a charging current of the first charging mode.

According to this technical solution, when the flying apparatus meets a preset charging condition, the flying apparatus may be charged by using different charging policies.

A third aspect not part of the invention discloses a parking slot, disposed on a vehicle and configured to lock a flying apparatus, where the parking slot includes a bottom wall and a side wall, a flow guiding slot and a wireless charging base are disposed on the bottom wall, the wireless charging base is configured to charge the flying apparatus, a direction of the flow guiding slot is substantially parallel to a front direction of the vehicle, a fastener is further disposed on the bottom wall, the fastener is further disposed to lock the flying apparatus, and/or the bottom wall and/or the side wall are/is provided with a slot, so as to connect inside and outside of the parking slot.

According to this technical solution, a parking slot is disposed on a vehicle, to lock the flying apparatus that lands in the parking slot, so as to prevent the flying apparatus from being stolen or falling off when the vehicle is traveling.

In a possible implementation, a shape of the flow guiding slot is any one of a straight line type, a fold line type, or a wave type, and the fastener is of a "J" type structure.

In a possible implementation, an air blowing inlet is further provided on the side wall, and the air blowing inlet is connected to an air outlet of the vehicle.

According to this technical solution, the air blowing inlet is provided in the parking slot, so that the flying apparatus can be blown when the flying apparatus is in an error correction phase.

In a possible implementation, a first circuit is further disposed on the bottom wall, a connection portion is disposed at the bottom of the flying apparatus, and when the flying apparatus lands in the parking slot, the first circuit forms a closed loop by using the connection portion.

According to this technical solution, it may be determined, by determining whether the first circuit is in a connected state, whether the flying apparatus lands in the parking slot.

This application provides a computer-readable storage medium, according to claim 10 including computer instructions. When the computer instructions are run on an electronic device, the electronic device is enabled to perform the assisted driving method according to the first aspect.

This application provides a chip according to claim 11 and an electronic device comprising the chip according to claim 12. The electronic device includes a processor and a memory, the memory is configured to store instructions, and the processor is configured to invoke the instructions in the memory, so that the electronic device performs the assisted driving method according to the first aspect.

It may be understood that the computer-readable storage medium of claim 10, the electronic device of claim 12 and the chip of claim 11 all correspond to the method according to the first aspect. Therefore, for beneficial effects that can be achieved by the storage medium, the electronic device, and the chip refer to beneficial effects in the corresponding method provided above, and details are not described herein again.

## BRIEF DESCRIPTION OF DRAWINGS

FIG. 1 is a diagram of an application scenario of an assisted driving method according to an embodiment of this application;
FIG. 2 is a schematic diagram of a possible structure of a parking slot according to an embodiment of this application;
FIG. 3 is a schematic diagram of data exchange between a vehicle and a flying apparatus according to an embodiment of this application;
FIG. 4 is a schematic flowchart of performing coordinate transformation on a first image according to an embodiment of this application;
FIG. 5 is a schematic flowchart of an assisted driving method according to an embodiment of this application;
FIG. 6 is a schematic flowchart of an assisted driving method according to another embodiment of this application;
FIG. 7 is a schematic diagram of target distances of a flying apparatus in all directions in a vehicle coordinate system according to an embodiment of this application;
FIG. 8 is a schematic flowchart of calculating a control value for a flying apparatus in each direction in a vehicle coordinate system according to an embodiment of this application;
FIG. 9 is a schematic diagram of functional modules of a first assisted driving apparatus according to an embodiment of this application;
FIG. 10 is a schematic diagram of functional modules of a second assisted driving apparatus according to an embodiment of this application;

FIG. 11 is a schematic diagram of a possible structure of a first electronic device according to an embodiment of this application; and

FIG. 12 is a schematic diagram of a possible structure of a second electronic device according to an embodiment of this application.

## DESCRIPTION OF EMBODIMENTS

To better understand the foregoing objectives, features, and advantages of this application, the following describes this application in detail with reference to the accompanying drawings and specific embodiments. It should be noted that embodiments of this application and the features in embodiments may be combined with each other provided that no conflict occurs.

It should be noted that, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In this specification, claims, and accompanying drawings of this application, terms "first", "second", "third", "fourth", and the like (if existent) are intended to distinguish between similar objects but do not necessarily indicate a specific order or sequence.

Vehicle to X (Vehicle to X, V2X) is information exchange between a vehicle and the outside. This technology is the ultimate ideal form of the future Internet of Vehicles (IoV) and connects vehicles to vehicles, vehicles to infrastructure, vehicles to pedestrians, and the like. In this case, the vehicle may communicate with traffic infrastructure (for example, a camera on a road) to observe information about a vehicle and a pedestrian in each direction, and a blind spot basically disappears, so that a problem caused by the blind spot can be avoided. However, the V2X technology requires a large amount of investment in implementation, and infrastructure construction requires a large amount of capital investment, the deployment period is long, and the V2X technology cannot be popularized in a short time. This application provides an assisted driving method. A flying apparatus may be used as a "pilot". The flying apparatus is equipped with one or more high-definition cameras, and sends, in real time by flying in front of a vehicle, a photographed traffic road condition to the vehicle for display, to resolve a traffic safety problem caused by a blind spot.

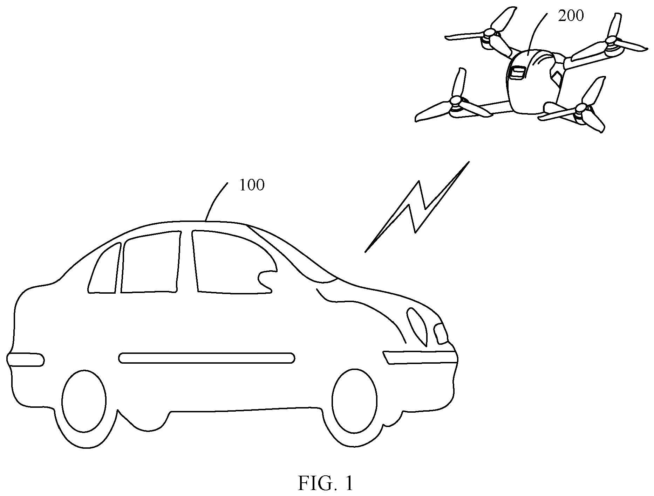

With reference to FIG. 1, the following describes an example of an application scenario diagram of an assisted driving method provided in an embodiment of this application.

The vehicle 100 may communicate with the flying apparatus 200 in a wireless manner. For example, the vehicle 100 may communicate with the flying apparatus 200 in a manner such as ZigBee, Bluetooth, or Wi-Fi. The vehicle 100 may be a family car, a truck, a bus, or the like. This is not limited herein. The flying apparatus 200 may be a small rotary-wing unmanned aerial vehicle, for example, a four-rotary-wing unmanned aerial vehicle. One or more cameras may be disposed on the flying apparatus 200. Definition and an angle of view of each camera may be selected based on an actual requirement, for example, the camera is a high-definition camera or an ultra-high-definition camera.

In some embodiments, the flying apparatus 200 includes a front-view camera, a top-view camera, and a rear-view camera. The front-view camera may be configured to identify traffic information on each lane in front of the vehicle 100, status information of a traffic light, and the like. The top-view camera may be configured to identify information such as a pedestrian and a vehicle in an area into which the vehicle 100 is about to travel. The rear-view camera may be configured to provide traffic information on each lane behind the vehicle 100. A driver or a passenger of the vehicle 100 may enable the flying apparatus 200 in a manner such as a voice, a button operation, or a touchscreen operation.

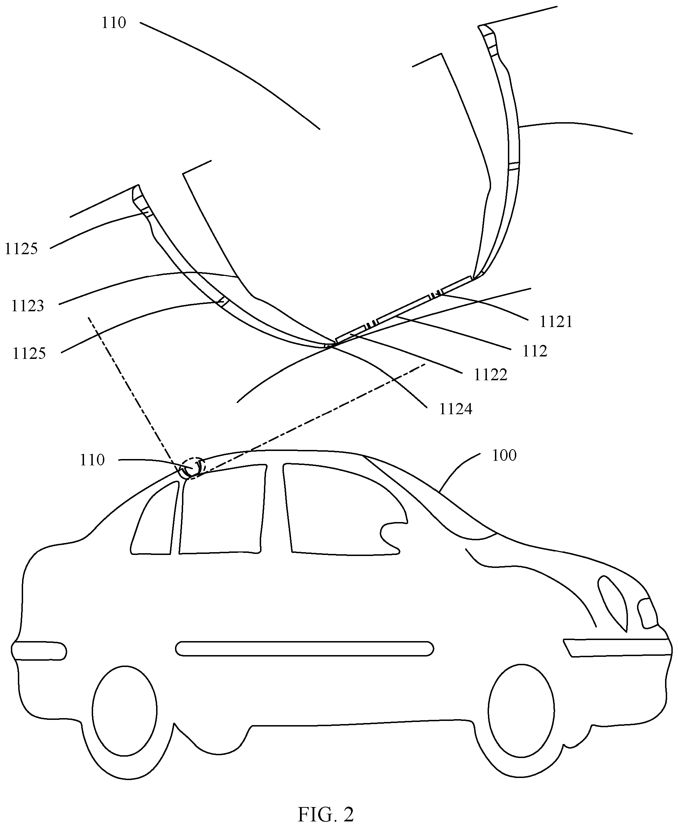

The following describes, with reference to FIG. 2, an example of a schematic diagram of a structure of a parking slot according to an embodiment of this application.

The parking slot 110 is disposed on the vehicle 100. For example, the parking slot 110 is disposed on the top of the vehicle 100, that is, the recessed parking slot 110 is disposed at a position that is on the top of the vehicle and that is away from a vehicle sunroof. The parking slot 110 includes a bottom wall 112 and a side wall 114. A flow guiding slot 1121 and a wireless charging base 1122 are disposed on the bottom wall 112. A wireless charging receiver is correspondingly disposed at the bottom of the flying apparatus 200. When the wireless charging receiver of the flying apparatus 200 is attached to the wireless charging base 1122, a charging condition may be met, so that the vehicle 100 can charge the flying apparatus 200.

The flow guiding slot 1121 disposed on the bottom wall 112 may facilitate heat dissipation of the flying apparatus 200 in a charging process. A direction of the flow guiding slot 1121 is basically the same as a direction in front of the vehicle 100. For example, the direction of the flow guiding slot 1121 is basically parallel to the direction in front of the vehicle 100. The flow guiding slot 1121 may be of a straight line type, a fold line type, a wave type, or the like. The bottom wall 112 is further provided with a fastener 1123 and a slot 1124. Optionally, a shape of the fastener 1123 is a "J" structure, and the fastener 1123 is configured to lock the flying apparatus 200. The slot 1124 is configured to connect inside and outside of the parking slot 110. For example, when it is raining, rainwater may flow out along the slot 1124, so that the rainwater may be prevented from flooding the flying apparatus 200 and causing damage to a component of the flying apparatus 200. Optionally, the slot 1124 passes through the interior of the vehicle top, and appearance does not affect a shape of the vehicle top. For example, the parking slot 110 is disposed close to a C-pillar of the vehicle 100, and the slot 1124 is connected to the outside of a rear windshield, so that rainwater may flow out along the rear windshield.

In some embodiments, a contour of the parking slot 110 may also be similar to that of the flying apparatus 200, and may be slightly larger than a contour of the flying apparatus 200. When the flying apparatus 200 lands in the parking slot 110, the fastener 1123 may automatically lock the flying apparatus 200, so that the flying apparatus 200 does not move relative to the vehicle 100. When the flying apparatus 200 prepares to take off, the flying apparatus 200 may control the fastener 1123 to be loosened, so that the flying apparatus 200 meets a take-off condition.

In some embodiments, the fastener 1123 has a self-locking function. When the vehicle 100 is powered off, the fastener 1123 is locked, to prevent the flying apparatus 200 from being stolen. The fastener 1123 is opened only when the vehicle 100 is started and the flying apparatus 200 meets the take-off condition. A first circuit may be further disposed on the bottom wall 112, and a connection portion is disposed at the bottom of the flying apparatus 200. When the flying apparatus 200 lands in the parking slot 110, the first circuit forms a closed loop by using the connection portion, that is, the first circuit is connected, so that it can be determined that the flying apparatus 200 successfully lands in the parking slot 110. The flying apparatus 200 may send landing success information to the vehicle 100, to prompt the driver. Optionally, the first circuit is an in-vehicle low-voltage circuit, for example, an in-vehicle 12 V circuit or an in-vehicle 24 V circuit.

In some embodiments, a slot 1124 may also be disposed on the side wall 114, so that the flying apparatus 200 dissipates heat in a charging process, and the flying apparatus 200 can also be prevented from being flooded by rainwater. The slot 1124 may also be a through hole, and the through hole is connected to inside and outside of the parking slot 110.

In some embodiments, one or more air blowing inlets 1125 are further provided on the side wall 114, and the air blowing inlets 1125 are connected to the air outlet of the vehicle 100. When the flying apparatus 200 prepares to take off, if the flying apparatus 200 is performing wireless charging, in this case, wireless charging is disabled; or if wireless charging is not performed, the flying apparatus 200 enters a take-off preparation phase. In the take-off preparation phase, the flying apparatus 200 performs self-test, and each rotary wing of the flying apparatus 200 rotate at a relatively low preset rotation speed. If a rotation speed of a rotary wing is abnormal and is significantly lower than that of another rotary wing, the rotary wing may be entangled by some tree branches and leaves, and error correction is attempted on the flying apparatus 200. In an error correction phase, the air blowing inlet 1125 is opened, and air is blown to the flying apparatus 200 by using a circulating fan of the vehicle 100 until a rotation speed of each rotary wing is normal. In a normal state, the air blowing inlet 1125 is in a closed state, and no air is blown to the flying apparatus 200. When the speeds of the rotary wings are still different after the error correction is attempted within the preset time, the driver may be reminded, by using a voice or an in-vehicle display, that the flying apparatus 200 cannot take off normally, and the driver needs to assist in resolving the problem.

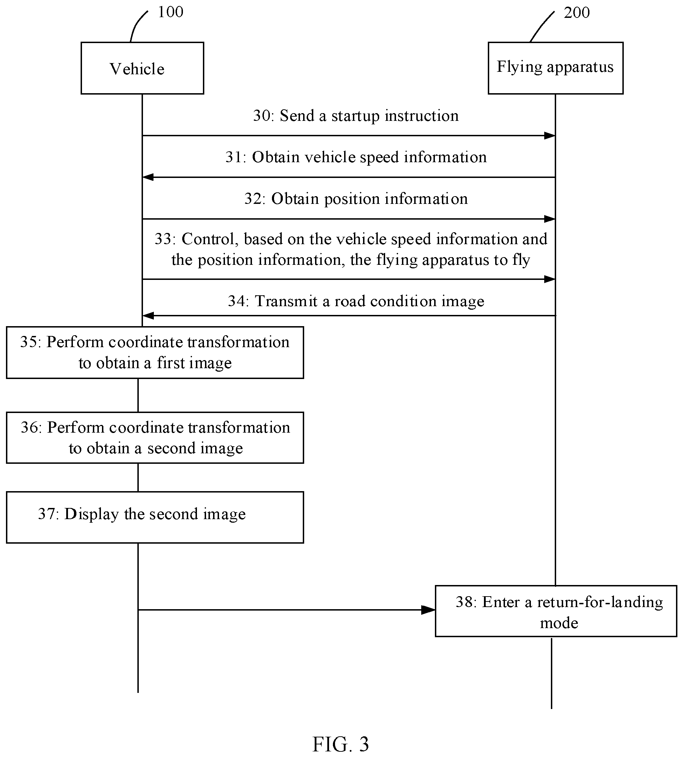

The following describes, with reference to FIG. 3, an example of a schematic diagram of data exchange between a vehicle 100 and a flying apparatus 200 according to an embodiment of this application.

30: When the flying apparatus 200 and the vehicle 100 meet a first preset condition, and the flying apparatus 200 receives a startup instruction sent by the vehicle 100, the flying apparatus 200 enters a self-test mode.

In some embodiments, when the driver enables the flying apparatus 200 by using a voice, a button operation, or a touchscreen operation, the flying apparatus 200 may receive a startup instruction sent by the vehicle 100. Before the flying apparatus 200 takes off, take-off condition detection is performed, that is, it is determined whether the flying apparatus 200 and the vehicle 100 meet the first preset condition, to determine whether the flying apparatus 200 may enter the self-test mode. When the flying apparatus 200 and the vehicle 100 meet the first preset condition, it indicates that the flying apparatus 200 meets the take-off condition, and the flying apparatus 200 enters the self-test mode.

According to the invention, that the flying apparatus 200 and the vehicle 100 meet the first preset condition is that power of the flying apparatus 200 meets a preset power requirement and a vehicle speed of the vehicle 100 meets a preset vehicle speed requirement.

In some embodiments, that the flying apparatus 200 and the vehicle 100 meet the first preset condition may alternatively be: remaining power of the flying apparatus 200 is greater than preset power, a vehicle speed of the vehicle 100 is lower than a preset vehicle speed, and the flying apparatus 200 communicates with the vehicle 100 normally. For example, the remaining power of the flying apparatus 200 is greater than 50%, or the state of charge (State of Charge, SOC) of the flying apparatus 200 is greater than 0.5, and the vehicle speed of the vehicle 100 is lower than 70 km/h. That the flying apparatus 200 and the vehicle 100 meet the first preset condition may alternatively be: remaining power of the flying apparatus 200 is greater than preset power, a vehicle speed of the vehicle 100 is lower than a preset vehicle speed, a rainfall in a flight environment of the flying apparatus 200 is less than a preset rainfall, and the flying apparatus 200 communicates with the vehicle 100 normally. The remaining power of the flying apparatus 200 and the vehicle speed of the vehicle 100 may be obtained by using a known measurement method. The rainfall in the flight environment may be measured by using a rainfall sensor, or the rainfall in the flight environment may be obtained by obtaining a gear of a windshield wiper of the vehicle 100.

In some embodiments, when the flying apparatus 200 enters the self-test mode, the flying apparatus 200 performs self-test. In this case, the flying apparatus 200 is still locked in the parking slot 110 by the fastener 1123, and each rotary wing of the flying apparatus 200 may rotate at a relatively low preset rotation speed. It is determined, by detecting whether a rotation speed of each rotary wing is normal, whether the flying apparatus 200 succeeds in the self-test. For example, if a rotation speed of each rotary wing is a preset rotation speed, it is determined that the flying apparatus 200 succeeds in the self-test. If it is detected that a rotation speed of a rotary wing is abnormal or is significantly lower than that of another rotary wing, it is determined that the flying apparatus 200 fails in the self-test.

31: When the flying apparatus 200 succeeds in the self-test, the flying apparatus 200 obtains vehicle speed information of the vehicle 100.

In some embodiments, optionally, that the flying apparatus 200 succeeds in the self-test may be: each rotary wing of the flying apparatus 200 rotates at a preset speed in the self-test mode, or each rotary wing rotates at a basically same speed in the self-test mode, for example, a speed difference falls within a preset percentage (for example, 5%). When the flying apparatus 200 succeeds in the self-test, it indicates that the flying apparatus 200 meets a take-off condition, and the flying apparatus 200 may communicate with the vehicle 100 to obtain vehicle speed information of the vehicle 100, so that the flying apparatus 200 can subsequently fly based on the vehicle speed information.

In some embodiments, before the flying apparatus 200 takes off, the fastener 1123 is in a locked state, and the flying apparatus 200 is locked in the parking slot 110. When the flying apparatus 200 passes the self-test, the fastener 1123 releases the flying apparatus 200, so that the flying apparatus 200 can take off from the parking slot 110.

In some embodiments, in the self-test mode, it is determined that the flying apparatus 200 fails in the self-test, and error correction may be attempted on the flying apparatus 200. In this case, the air blowing inlet 1125 is opened, and air is blown to the flying apparatus 200 by using a circulating fan of the vehicle 100. When the speeds of the rotary wings are still different after the error correction is attempted within the preset time, the preset prompt information may be output by using a voice or an in-vehicle display, to inform the driver that the flying apparatus 200 cannot take off normally, and the driver needs to assist in resolving the problem. For example, when a rotary wing is entangled by tree branches or leaves, it cannot be ensured that the speeds of the rotary wings are the same by blowing air through the air blowing inlet 1125, and the driver needs to be instructed to assist in resolving the problem. For another example, the rotary wing or a rotary wing driving motor is abnormal, and consequently the speeds of the rotary wings are different, and the driver needs to be instructed to assist in resolving the problem.

In some embodiments, when the flying apparatus 200 succeeds in the self-test within a preset blowing time, it indicates that error correction on the flying apparatus 200 succeeds, the flying apparatus 200 meets the take-off condition, and the flying apparatus 200 may obtain the vehicle speed information of the vehicle 100.

32: Obtain information about a position of the flying apparatus 200 relative to the vehicle 100.

In some embodiments, when the flying apparatus 200 succeeds in the self-test or is in a flight process, the information about the position of the flying apparatus 200 relative to the vehicle 100 may be obtained in real time. For example, a wireless module is disposed on the flying apparatus 200, and the vehicle 100 may obtain the information about the position of the flying apparatus 200 relative to the vehicle 100 by measuring a radio signal strength of the wireless module.

33: Control, based on the vehicle speed information and the position information, the flying apparatus 200 to fly.

In some embodiments, the flying apparatus 200 may be controlled, based on a current vehicle speed of the vehicle 100 and a current position of the flying apparatus 200 relative to the vehicle 100, to fly, so that a flight speed at which the flying apparatus 200 fly in front of the vehicle 100 is basically the same as the vehicle speed, and a specific relative position is maintained between the flying apparatus 200 and the vehicle.

34: The flying apparatus 200 transmits, to the vehicle 100, a road condition image shot by a camera.

In some embodiments, the flying apparatus 200 keeps wireless communication with the vehicle 100. The flying apparatus 200 may transmit, to the vehicle 100 in real time, the road condition image shot by the camera. The road condition image received by the vehicle 100 may be displayed by using an in-vehicle display apparatus such as an in-vehicle display or a head-up display (Head-Up Display, HUD), or may be transmitted to an autonomous driving system for autonomous driving analysis.

In some embodiments, as shown in FIG. 1, a first three-dimensional coordinate system S1 (flying apparatus coordinate system S1) is defined for the flying apparatus 200, where an X axis of the first three-dimensional coordinate system S1 is a front direction of the vehicle 100, a Y axis is a direction perpendicular to the X axis on a horizontal plane, and a Z axis is an upward direction perpendicular to an XY plane. A second three-dimensional coordinate system S2 (vehicle coordinate system S2) having same directions as the first three-dimensional coordinate system S1 is defined for the vehicle 100; and a third three-dimensional coordinate system S3 having same directions as the first three-dimensional coordinate system S1 is defined for the camera. When a plurality of cameras are disposed on the flying apparatus 200, a three-dimensional coordinate system may be defined for each camera.

35: Perform coordinate transformation on the road condition image that is shot based on the third three-dimensional coordinate system S3, to obtain a first image in the first three-dimensional coordinate system S1.

In some embodiments, a third three-dimensional coordinate system S3 is defined for the camera, and the road condition image is an image shot in the third three-dimensional coordinate system S3, that is, an image in an angle of view of the camera, and is not suitable for being directly displayed on the in-vehicle display apparatus. When receiving the road condition image transmitted by the flying apparatus 200, the vehicle 100 may first transform the road condition image shot by the camera into an image in an angle of view of the flying apparatus 200, that is, perform coordinate transformation on the road condition image shot in the third three-dimensional coordinate system S3, to obtain the first image in the flying apparatus coordinate system S1.

In some embodiments, coordinate transformation may be performed on a road condition image obtained by each camera (for example, a front-view camera, a top-view camera, or a rear-view camera) to obtain a plurality of first images in the flying apparatus coordinate system S1. Because the camera of the flying apparatus 200 is installed at a fixed position, a rule for coordinate transformation between each camera and the flying apparatus 200 may be defined based on an installation position of each camera. For example, for the front-view camera, a first coordinate transformation rule for transforming a road condition image shot by the front-view camera into a road condition image in the flying apparatus coordinate system S1 may be defined based on an installation position of the front-view camera, so that coordinate transformation may be performed on the road condition image shot by the front-view camera according to the first coordinate transformation rule, to obtain an image in the flying apparatus coordinate system S1. For the rear-view camera, a second coordinate transformation rule may be defined based on an installation position of the rear-view camera to transform a road condition image shot by the rear-view camera into the road condition image in the flying apparatus coordinate system, so that coordinate transformation may be performed on the road condition image shot by the rear-view camera according to the second coordinate transformation rule, to obtain another image in the flying apparatus coordinate system S1.

36: Perform coordinate transformation on the first image to obtain a second image in the second three-dimensional coordinate system S2.

In some embodiments, the first image is an image in an angle of view of the flying apparatus 200 and is still not suitable for being displayed on the in-vehicle display apparatus, and coordinate transformation may be performed on the first image to obtain a second image in the vehicle coordinate system S2, that is, an image in an angle of view of the vehicle 100.

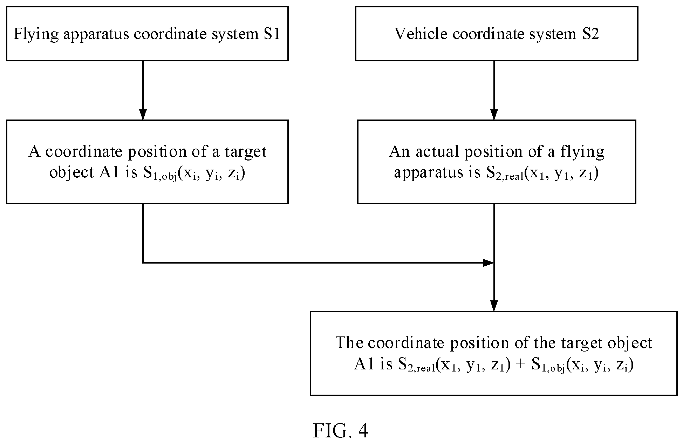

As shown in FIG. 4, coordinate transformation may be performed on the first image based on an actual position of the flying apparatus 200 in the vehicle coordinate system S2, to obtain the second image in the vehicle coordinate system S2. For example, a coordinate position of a target object A1 in the flying apparatus coordinate system S1 is $S_{1,obj}(x_i, y_i, z_i)$, and an actual position of the flying apparatus 200 in the vehicle coordinate system S2 is $S_{2,real}(x_1, y_1, z_1)$. In this case, a coordinate position of the target object A1 in the vehicle coordinate system S2 may be obtained through conversion: $S_{2,real}(x_1, y_1, z_1)$ + $S_{1,obj}(x_i, y_i, z_i)$.

In some embodiments, the vehicle 100 may directly obtain, through measurement, the actual position of the flying apparatus 200 in the vehicle coordinate system S2. For example, the actual position of the flying apparatus 200 in the vehicle coordinate system S2 may be obtained through measurement by using a positioning method based on a differential signal, a Bluetooth signal, and a Wi-Fi signal. A wireless module is disposed on the flying apparatus 200, and a radio signal detection module is disposed on the vehicle 100. The vehicle 100 measures a radio signal strength of the wireless module, and obtains, based on the radio signal strength, a first actual distance $x_1$ of the flying apparatus 200 relative to the coordinate origin of the vehicle coordinate system in the X-axis direction, a second actual distance $y_1$ of the flying apparatus 200 relative to the coordinate origin of the vehicle coordinate system in the Y-axis direction, and a third actual distance $z_1$ of the flying apparatus 200 relative to the coordinate origin of the vehicle coordinate system in the Z-axis direction.

37: Display the second image on the in-vehicle display apparatus.

In some embodiments, when the second image in the vehicle coordinate system S2 is obtained, the second image may be displayed on the in-vehicle display apparatus, so that image information around the vehicle is obtained by using the flying apparatus 200, so that the driver makes an intelligent decision. For example, a pedestrian or a rider that is to rush out may be observed by using the top-view camera of the flying apparatus 200, so that the driver or an intelligent driving module makes a response in advance, thereby reducing traffic accidents. Information about a traffic light in front of the flying apparatus 200 may be displayed on the in-vehicle display apparatus by using the front-view camera of the flying apparatus 200, so that the driver is not blocked by a vehicle in front of the flying apparatus and can see the traffic light. When a traffic accident or traffic congestion occurs on a lane ahead, traffic information of each lane may be displayed on the in-vehicle display apparatus in advance by using the front-view camera of the flying apparatus 200, so that the driver makes a lane change decision in advance, thereby improving traffic efficiency of the driver. When the driver is ready to change a lane or turn, the rear-view camera of the flying apparatus 200 may display information about a rear vehicle and a pedestrian on the in-vehicle display apparatus, so that the driver can make a safe driving decision.

In some embodiments, for a plurality of vehicles 100 and a plurality of flying apparatuses 200 on a road, a road condition image shot by the flying apparatuses 200 may be shared, so that vehicle driving safety and road traffic efficiency can be further improved.

38: When the flying apparatus 200 and/or the vehicle 100 meet/meets a preset landing condition, the flying apparatus 200 enters a return-for-landing mode.

In some embodiments, when the flying apparatus 200 and/or the vehicle 100 meet/meets a preset landing condition, the flying apparatus 200 enters a return-for-landing mode, to land in the parking slot 110. The preset landing condition may include at least one of the following: the flying apparatus 200 receives a return instruction sent by the vehicle 100, remaining power of the flying apparatus 200 is less than a preset threshold, a vehicle speed of the vehicle 100 is higher than a preset vehicle speed for a first preset time, a rainfall in a flight environment of the flying apparatus 200 is greater than a preset rainfall for a second preset time, and a communication exception occurs between the flying apparatus 200 and the vehicle 100 for a third preset time.

For example, the driver may control, by using a voice, a button operation, or a touchscreen operation, the vehicle 100 to send the return instruction to the flying apparatus 200 when the remaining power of the flying apparatus 200 is less than 10%, an SOC of the flying apparatus 200 is less than 0.1, a vehicle speed of the vehicle 100 is higher than 70 km/h for 30 seconds, and the rainfall in the flight environment is greater than the preset rainfall for 10 seconds (being greater than the preset rainfall may mean that the rainfall is greater than 15 mm, a wiping speed of the automatic windshield wiper is higher than a preset speed), or a communication exception occurs between the flying apparatus 200 and the vehicle 100 for 10 seconds. When one of the foregoing scenarios occurs, the flying apparatus 200 enters the return-for-landing mode, and the flying apparatus 200 tracks a center point of the parking slot 110 by using a camera, and adjusts a speed and a position of the flying apparatus 200 in the X-axis direction and a speed and a position of the flying apparatus 200 in the Y-axis direction, so that the center point of the parking slot 110 is in a same vertical direction as a center point of the flying apparatus 200, and a flight height of the flying apparatus 200 gradually decreases to a vehicle body height of the vehicle 100, so that the flying apparatus 200 lands in the parking slot 110.

In some embodiments, when detecting that the first circuit is in the connected state, the vehicle 100 may determine that the flying apparatus 200 has landed in the parking slot 110. The vehicle 100 may control the fastener 1123 to lock the flying apparatus 200 in the parking slot 110, to prevent the flying apparatus 200 from being falling off or stolen. When the vehicle 100 detects that the fastener 1123 successfully locks the flying apparatus 200, the in-vehicle display apparatus may output landing success prompt information, to prompt the driver.

In some embodiments, when the flying apparatus 200 stays in the parking slot 110, a locking signal of the fastener 1123 is normal, and the first circuit is in the connected state, it indicates that the flying apparatus 200 meets a charging condition. The driver may select the first charging mode (slow charging) or the second charging mode (fast charging) by using a voice, a button operation, a touch operation, or the like. By default, the charging mode is the first charging mode, and a charging current in the second charging mode is greater than a charging current of the first charging mode. When the driver does not deliver a charging instruction, the flying apparatus 200 meets a charging condition, and remaining power of the flying apparatus 200 is less than a specific value (for example, less than 50%), the flying apparatus 200 is automatically charged in the first charging mode. When the remaining power of the vehicle 100 is less than a specific value (for example, less than 20%), it may be determined that the power of the vehicle 100 is insufficient, a power consumption requirement of the vehicle 100 is preferentially considered, and automatic charging of the flying apparatus 200 is canceled, but the driver is allowed to forcibly enable a function of charging the flying apparatus 200. When the flying apparatus 200 is fully charged, the wireless charging function is automatically disabled, and the flying apparatus 200 is in a sleep state.

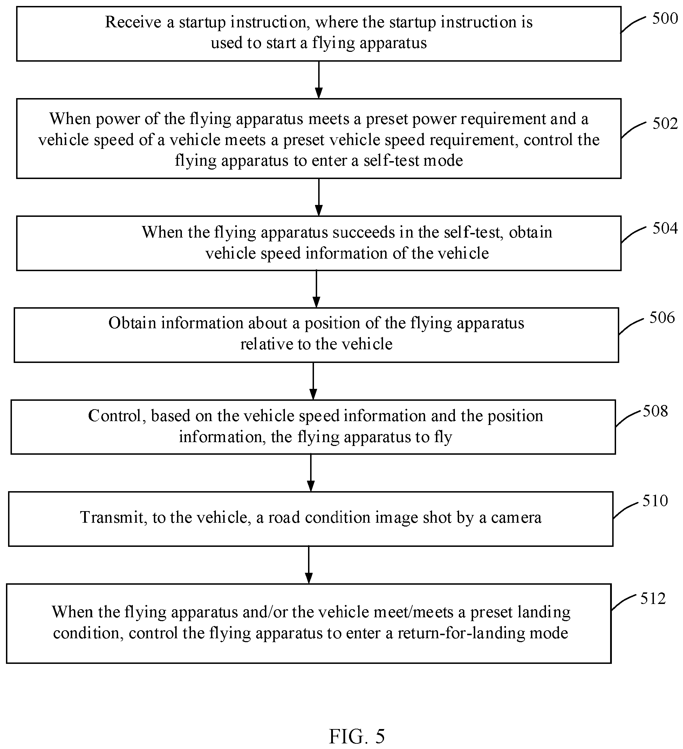

Refer to FIG. 5. An embodiment of this application provides an assisted driving method. In this embodiment, the assisted driving method includes the following steps:

500: Receive a startup instruction, where the startup instruction is used to start the flying apparatus 200.

In some embodiments, when the flying apparatus 200 establishes a communication connection to the vehicle 100, the flying apparatus 200 may receive a startup instruction transmitted by the vehicle 100, where the start instruction is used to start the flying apparatus 200. The flying apparatus is provided with a camera for shooting a road condition image.

502: When power of the flying apparatus 200 meets a preset power requirement and a vehicle speed of the vehicle 100 meets a preset vehicle speed requirement, control the flying apparatus 200 to enter a self-test mode.

In some embodiments, when the power of the flying apparatus 200 meets the preset power requirement and the vehicle speed of the vehicle 100 meets the preset vehicle speed requirement, the flying apparatus 200 may be controlled to enter the self-test mode. For example, when the remaining power of the flying apparatus 200 is greater than 50%, and the vehicle speed of the vehicle 100 is lower than 70 km/h, the flying apparatus 200 may be controlled to enter the self-test mode. For another example, when the remaining power of the flying apparatus 200 is greater than 50%, the rainfall in the flight environment is less than 15 mm/1d, and the vehicle speed of the vehicle 100 is lower than 70 km/h, the flying apparatus 200 may be controlled to enter the self-test mode.

504: Obtain vehicle speed information of the vehicle 100 when the flying apparatus 200 succeeds in the self-test.

In some embodiments, optionally, that the flying apparatus 200 succeeds in the self-test means that each rotary wing of the flying apparatus 200 rotates at a preset rotation speed in the self-test mode, or each rotary wing rotates at a basically same rotation speed in the self-test mode (for example, a rotation speed difference is within 5%). When the flying apparatus 200 succeeds in the self-test, it indicates that the flying apparatus 200 meets the take-off condition, and the flying apparatus 200 may communicate with the vehicle 100 to obtain the vehicle speed information of the vehicle 100.

506: Obtain information about a position of the flying apparatus 200 relative to the vehicle 100.

In some embodiments, when the flying apparatus 200 succeeds in the self-test or is in a flight process, the information about the position of the flying apparatus 200 relative to the vehicle 100 may be obtained in real time. For example, a wireless module is disposed on the vehicle 100, and the flying apparatus 200 may obtain the information about the position of the flying apparatus 200 relative to the vehicle 100 by measuring a radio signal strength of the wireless module.

508: Control, based on the vehicle speed information and the position information, the flying apparatus 200 to fly.

In some embodiments, the flying apparatus 200 may be controlled, based on a current vehicle speed of the vehicle 100 and a current position of the flying apparatus 200 relative to the vehicle 100, to fly, so that a flight speed at which the flying apparatus 200 fly in front of the vehicle 100 is basically the same as the vehicle speed, and a specific relative position is maintained between the flying apparatus 200 and the vehicle.

510: Transmit the road condition image shot by the camera to the vehicle 100.

In some embodiments, the flying apparatus 200 keeps wireless communication with the vehicle 100. The flying apparatus 200 may transmit, to the vehicle 100 in real time, the road condition image shot by the camera. The road condition image received by the vehicle 100 may be displayed by using an in-vehicle display apparatus such as an in-vehicle display or an HUD, or may be transmitted to an autonomous driving system for autonomous driving analysis.

512: When the flying apparatus 200 and/or the vehicle 100 meet/meets a preset landing condition, control the flying apparatus 200 to enter a return-for-landing mode.

In some embodiments, when the flying apparatus 200 and/or the vehicle 100 meet/meets the preset landing condition, the flying apparatus 200 may be controlled to enter the return-for-landing mode, to land in the parking slot 110. The preset landing condition may include at least one of the following: the flying apparatus 200 receives a return instruction sent by the vehicle 100, remaining power of the flying apparatus 200 is less than a preset threshold, a vehicle speed of the vehicle 100 is higher than a preset vehicle speed for a first preset time, a rainfall in a flight environment of the flying apparatus 200 is greater than a preset rainfall for a second preset time, and a communication exception occurs between the flying apparatus 200 and the vehicle 100 for a third preset time.

In the foregoing assisted driving method, the flying apparatus 200 is used to obtain the road condition image around the vehicle in real time, and transmit the road condition image to the vehicle for display or autonomous driving decision-making, so that driving safety of the vehicle and road traffic efficiency can be improved.

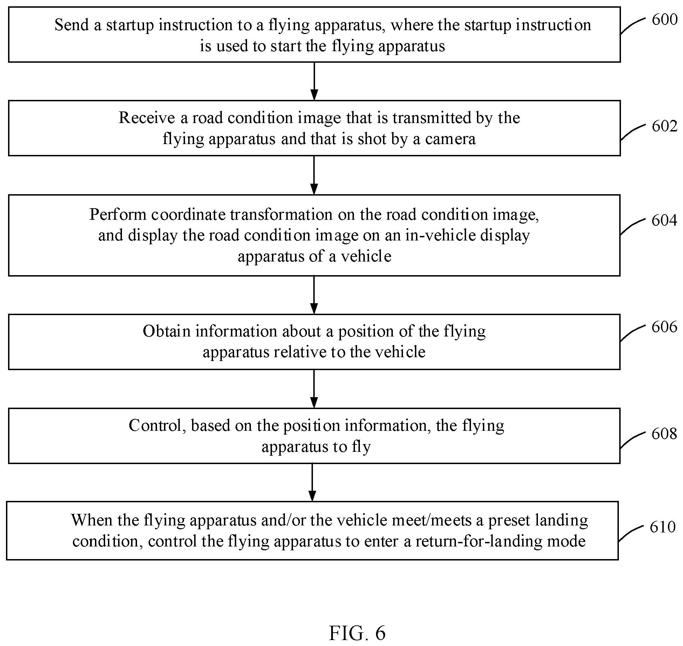

Refer to FIG. 6. An embodiment of this application provides an assisted driving method. In this embodiment, the assisted driving method includes the following steps:

600: Send a startup instruction to a flying apparatus 200, where the startup instruction is used to start the flying apparatus 200.

In some embodiments, a driver may control, by using a voice, a button operation, or a touchscreen operation, a vehicle 100 to send a startup instruction to the flying apparatus 200, where the startup instruction is used to start the flying apparatus 200. The flying apparatus is provided with a camera for shooting a road condition image.

602: Receive a road condition image that is transmitted by the flying apparatus 200 and that is shot by the camera.

In some embodiments, the flying apparatus 200 keeps wireless communication with the vehicle 100, and the vehicle 100 may receive the road condition image transmitted by the flying apparatus 200.

604: Perform coordinate transformation on the road condition image, and display the road condition image on an in-vehicle display apparatus of the vehicle 100.

In some embodiments, a first three-dimensional coordinate system S1 is defined for the flying apparatus 200; a second three-dimensional coordinate system S2 having same directions as the first three-dimensional coordinate system S1 is defined for the vehicle 100; and a third three-dimensional coordinate system S3 having same directions as the first three-dimensional coordinate system S1 is defined for the camera. The vehicle 100 may perform coordinate transformation on the road condition image that is shot based on the third three-dimensional coordinate system S3 to obtain a first image in the first three-dimensional coordinate system S1, perform coordinate transformation on the first image to obtain a second image in the second three-dimensional coordinate system S2, and display the second image on the in-vehicle display apparatus.

In some embodiments, the road condition image is an image shot in the third three-dimensional coordinate system S3, that is, an image in an angle of view of the camera, and is not suitable for being directly displayed on the in-vehicle display apparatus. When receiving the road condition image transmitted by the flying apparatus 200, the vehicle 100 may first transform the road condition image shot by the camera into an image at the angle of view of the flying apparatus 200, that is, perform coordinate transformation on the road condition image shot in the third three-dimensional coordinate system S3, to obtain a first image in the flying apparatus coordinate system S1, and then perform coordinate transformation on the first image to obtain a second image in the vehicle coordinate system S2, that is, an image at the angle of view of the vehicle 100. When the second image in the vehicle coordinate system S2 is obtained, the second image may be displayed on the in-vehicle display apparatus, so that image information around the vehicle is obtained by using the flying apparatus 200, so that the driver makes an intelligent decision.

606: Obtain information about a position of the flying apparatus 200 relative to the vehicle 100.

In some embodiments, when the flying apparatus 200 succeeds in the self-test or is in a flight process, the information about the position of the flying apparatus 200 relative to the vehicle 100 may be obtained in real time. For example, a wireless module is disposed on the flying apparatus 200, and the vehicle 100 may obtain the information about the position of the flying apparatus 200 relative to the vehicle 100 by measuring a radio signal strength of the wireless module.

608: Control, based on the position information, the flying apparatus 200 to fly.

In some embodiments, the flying apparatus 200 may be controlled, based on a current position of the flying apparatus 200 relative to the vehicle 100, to fly, so that the flying apparatus 200 fly in front of the vehicle 100, and a specific relative position is maintained between the flying apparatus 200 and the vehicle.

610: When the flying apparatus 200 and/or the vehicle 100 meet/meets a preset landing condition, control the flying apparatus 200 to enter a return-for-landing mode.

In some embodiments, when the flying apparatus 200 and/or the vehicle 100 meet/meets a preset landing condition, the flying apparatus 200 is controlled to enter the return-for-landing mode, to land in the parking slot 110. The preset landing condition may include at least one of the following: the flying apparatus 200 receives a return instruction sent by the vehicle 100, remaining power of the flying apparatus 200 is less than a preset threshold, a vehicle speed of the vehicle 100 is higher than a preset vehicle speed for a first preset time, a rainfall in a flight environment of the flying apparatus 200 is greater than a preset rainfall for a second preset time, and a communication exception occurs between the flying apparatus 200 and the vehicle 100 for a third preset time.

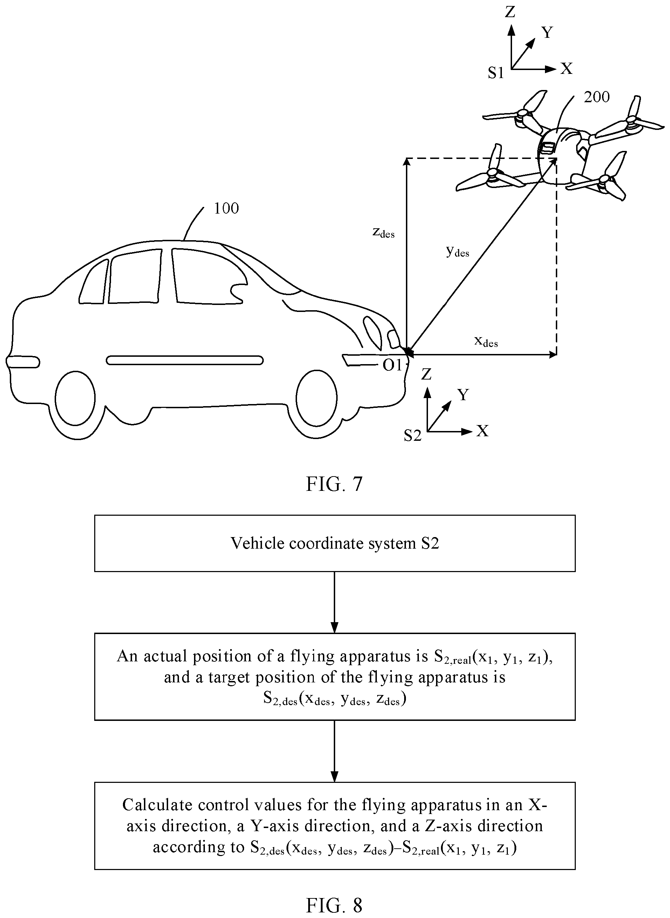

In some embodiments, to enable the flying apparatus 200 to obtain relatively comprehensive traffic information around the vehicle 100 (for example, to help a top-view camera to detect whether a pedestrian or a non-motor vehicle crosses a road in front of the vehicle), as shown in FIG. 7, the flying apparatus 200 may optionally fly in front of the vehicle 100. A first target distance $x_{des}$ relative to an origin O1 of the vehicle coordinate system in the X-axis direction, a second target distance $y_{des}$ relative to an origin O1 of the vehicle coordinate system in the Y-axis direction, and a third target distance $z_{des}$ relative to an origin O1 of the vehicle coordinate system in the Z-axis direction are set for the flying apparatus 200. It is assumed that a vehicle speed, an acceleration, and a steering wheel rotation angle of the vehicle 100 are v, a, and $\theta$, respectively. The first target distance $x_{des}$ may be represented as a function of a vehicle speed, an acceleration, and a steering wheel rotation angle, that is, the first target distance $x_{des}$ is determined based on a current vehicle speed, a current acceleration, and a current steering wheel rotation angle that are of the vehicle 100. The first target distance $x_{des}$ may be represented as: $x_{des} = f(v, a, \theta)$, where $x_{des}$ is positively correlated with v and a, that is, when a vehicle speed and acceleration are higher, a distance (that is, the first target distance $x_{des}$) from the flying apparatus 200 to the vehicle in the X direction should also be greater; and $x_{des}$ is negatively correlated with $\theta$, that is, when $\theta$ is greater, a moving distance component of the vehicle 100 in the X direction is smaller, and the distance between the flying apparatus 200 and the vehicle in the X direction should also be shorter.

The second target distance $y_{des}$ may be represented as a function of a preset time constant, a vehicle speed, an acceleration, and a steering wheel rotation angle, that is, the second target distance $y_{des}$ is determined based on the preset time constant, a current vehicle speed, a current acceleration, and a current steering wheel rotation angle that are of the vehicle 100. For example, the preset time constant is t, and the second target distance $y_{des}$ may be represented as: $y_{des} = f(v, a, \theta, t)$, where $y_{des}$ is positively correlated with v and a, that is, when the vehicle speed and acceleration are higher, the distance between the flying apparatus 200 and the vehicle in the Y direction (that is, the second target distance $y_{des}$) should also be greater; $y_{des}$ is negatively correlated with $\theta$, that is, when $\theta$ is greater, the distance between the flying apparatus 200 and the vehicle in the Y direction should also be shorter; and a value of t may be preset according to an actual requirement, and a larger value of t indicates a longer second target distance $y_{des}$.

It is assumed that a height indicated by a height limit sign in front of the vehicle 100 is zi, a height of an obstacle vehicle in front of the vehicle 100 is $z_2$, and a preset safe height set by the flying apparatus 200 by default is $z_0$. The third target distance $z_{des}$ may meet the following expression:

$$z_2 + z_0 < z_{des} < z_1 - z_0.$$

If the flying apparatus 200 detects that there is neither a height limit sign or nor an obstacle vehicle in front of the vehicle 100, the flying apparatus 200 may set the third target distance $z_{des}$ to the preset safe height $z_0$, that is, $z_{des} = z_0$. If the flying apparatus 200 detects that there is a height limit sign in front of the vehicle 100, but there is no obstacle vehicle, the flying apparatus 200 may determine a third target distance $z_{des}$ based on a height $z_1$ indicated by the height limit sign and the preset safe height $z_0$. The third target distance $z_{des}$ may be represented as a function of $z_1$ and $z_0$: $z_{des} = f(z_1 - z_0)$. If the flying apparatus 200 detects that there is no height limit sign in front of the vehicle 100, but there is an obstacle vehicle, the flying apparatus 200 may determine a third target distance $z_{des}$ based on a height $z_2$ of the obstacle vehicle and the preset safe height $z_0$. The third target distance $z_{des}$ may be represented as a function of $z_2$ and $z_0$: $z_{des} = f(z_2 + z_0)$. If the flying apparatus 200 detects that there is a height limit sign and an obstacle vehicle in front of the vehicle 100, the flying apparatus 200 may determine a third target distance $z_{des}$ based on a height $z_1$ indicated by the height limit sign and a height $z_2$ of the obstacle vehicle. The third target distance $z_{des}$ may be represented as a function of $z_1$ and $z_2$: $z_{des} = f[(z_1 + z_2)/2]$.

In some embodiments, at any moment $t_i$ at which the vehicle 100 travels, the vehicle 100 may obtain the first actual distance $x_1$, the second actual distance $y_1$, and the third actual distance $z_1$ that are of the flying apparatus 200 in the vehicle coordinate system S2 by measuring the radio signal strength of the wireless module of the flying apparatus 200. In addition, the first target distance $x_{des}$, the second target distance $y_{des}$, and the third target distance $z_{des}$ at the moment $t_i$ may be obtained based on the current vehicle speed, the current acceleration, and the current steering wheel rotation angle that are of the vehicle 100.

When the target position and the actual position of the flying apparatus 200 at the moment $t_i$ are obtained, a difference between the target position and the actual position may be calculated to obtain control values for the flying apparatus 200 in the X-axis direction, the Y-axis direction, and the Z-axis direction. For example, a control value for the flying apparatus 200 in the X-axis direction is determined based on a difference between the first target distance $x_{des}$ and the first actual distance $x_1$, so that the difference between the first target distance $x_{des}$ and the first actual distance xi falls within a first preset range; and a control value for the flying apparatus 200 in the Y-axis direction is determined based on a difference between the second target distance $y_{des}$ and the second actual distance $y_1$, so that the difference between the second target distance $y_{des}$ and the second actual distance $y_1$ falls within a second preset range; and a control value for the flying apparatus 200 in the Z-axis direction is determined based on a difference between the third target distance $z_{des}$ and the third actual distance zi, so that the difference between the third target distance $z_{des}$ and the third actual distance $z_1$ falls within a third preset range. The first preset range, the second preset range, and the third preset range may all be set according to an actual requirement. For example, the first preset range, the second preset range, and the third preset range are all set to 0 cm to 50 cm.

It may be understood that, in a traveling process of the vehicle 100, parameters v, a, $\theta$, zi, and $z_2$ will change, that is, the first target distance $x_{des}$, the second target distance $y_{des}$, and the third target distance $z_{des}$ may be adjusted at any time. A current actual position of the flying apparatus 200 is obtained to dynamically adjust flight of the flying apparatus 200 in real time, so that the difference between the first target distance $x_{des}$ and the first actual distance xi falls within the first preset range, the difference between the second target distance $y_{des}$ and the second actual distance $y_1$ falls within the second preset range, and the difference between the third target distance $z_{des}$ and the third actual distance $z_1$ falls within the third preset range.

As shown in FIG. 8, it is assumed that the vehicle 100 is in a straight-line state (a steering wheel rotation angle $\theta$ is 0 degrees), an actual position of the flying apparatus 200 in the vehicle coordinate system S2 is $S_{2,real}(x_1, y_1, z_1)$, and a target position of the flying apparatus 200 in the vehicle coordinate system S2 is $S_{2,des}(x_{des}, y_{des}, z_{des})$. In this case, control values for the flying apparatus 200 in the X-axis direction, the Y-axis direction, and the Z-axis direction may be obtained through calculation according to the following formulas: $S_{2,des}(x_{des}, y_{des}, x_{des}) - S_{2,real}(x_1, y_1, z_1)$.

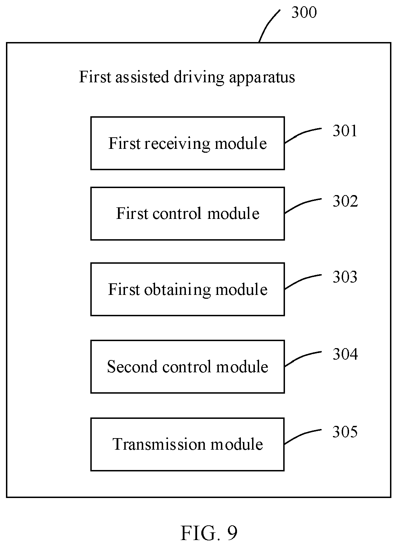

FIG. 9 is a schematic diagram of functional modules of a first assisted driving apparatus 300 according to an embodiment of this application. The first assisted driving apparatus 300 may be applied to the flying apparatus 200, and the flying apparatus 200 is in communication connection to the vehicle 100. As shown in FIG. 9, the first assisted driving apparatus 300 may include a first receiving module 301, a first control module 302, a first obtaining module 303, a second control module 304, and a transmission module 305. The module described in the embodiments of the present invention may be a program segment for completing a specific function, and is more suitable for describing an execution process of software in a processor than a program. The one or more modules may be stored in the memory and configured to be executed by one or more processors.

The first receiving module 301 is configured to receive a startup instruction. The startup instruction is used to start the flying apparatus 200.

The first control module 302 is configured to: when the power of the flying apparatus 200 meets a preset power requirement and a vehicle speed of the vehicle 100 meets a preset vehicle speed requirement, control the flying apparatus 200 to enter a self-test mode.

The first obtaining module 303 is configured to obtain vehicle speed information of the vehicle 100 when the flying apparatus 200 succeeds in the self-test.

The first obtaining module 303 is further configured to obtain information about a position of the flying apparatus 200 relative to the vehicle 100.

The second control module 304 is configured to control, based on the vehicle speed information and the position information, the flying apparatus 200 to fly.

The transmission module 305 is configured to transmit, to the vehicle 100, a road condition image shot by a camera.

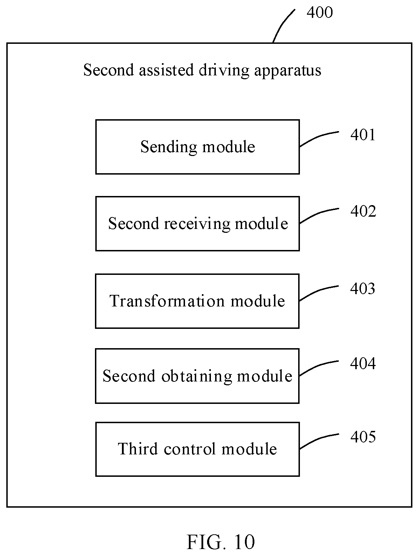

FIG. 10 is a schematic diagram of functional modules of a second assisted driving apparatus 400 according to an embodiment of this application. The second assisted driving apparatus 400 may be applied to the vehicle 100, and the flying apparatus 200 is in communication connection to the vehicle 100. As shown in FIG. 10, the second assisted driving apparatus 400 may include a sending module 401, a second receiving module 402, a transformation module 403, a second obtaining module 404, and a third control module 405. The module described in the embodiments of the present invention may be a program segment for completing a specific function, and is more suitable for describing an execution process of software in a processor than a program. The one or more modules may be stored in the memory and configured to be executed by one or more processors.

The sending module 401 is configured to send a startup instruction to the flying apparatus 200, where the startup instruction is used to start the flying apparatus 200. A camera is disposed on the flying apparatus 200.

The second receiving module 402 is configured to receive a road condition image that is transmitted by the flying apparatus 200 and that is shot by a camera.

The transformation module 403 is configured to perform coordinate transformation on the road condition image, and display the road condition image on the in-vehicle display apparatus of the vehicle 100.

The second obtaining module 404 is configured to obtain information about a position of the flying apparatus 200 relative to the vehicle 100.

The third control module 405 is configured to control, based on the position information, the flying apparatus 200 to fly.

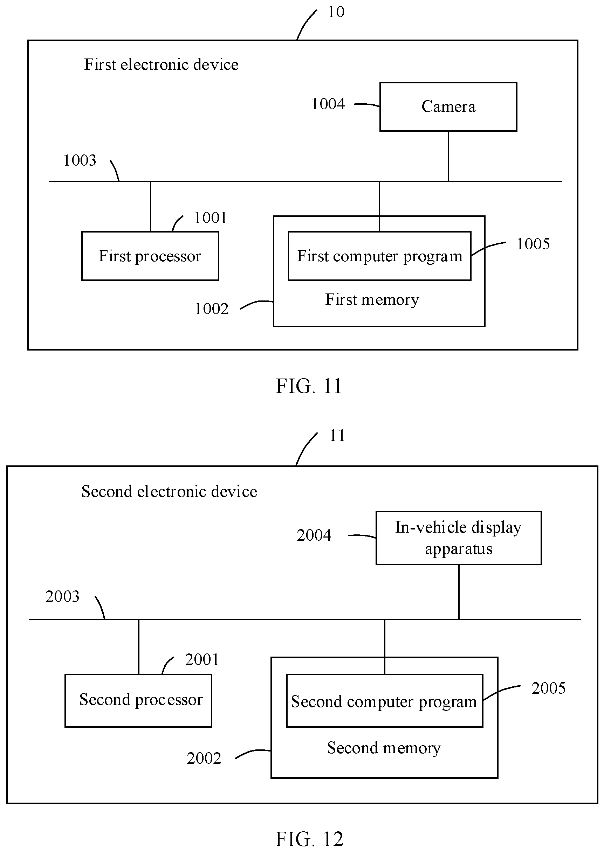

FIG. 11 is a schematic diagram of a hardware structure of a first electronic device 10 according to an embodiment of this application. As shown in FIG. 11, the first electronic device 10 may include a first processor 1001, a first memory 1002, a first communication bus 1003, and a camera 1004. The first memory 1002 is configured to store one or more first computer programs 1005. The one or more first computer programs 1005 are configured to be executed by the first processor 1001. The one or more first computer programs 1005 include instructions, and the instructions may be used to perform the assisted driving method shown in FIG. 5 in the first electronic device 10.

It may be understood that the structure shown in this embodiment does not constitute a specific limitation on the first electronic device 10. In some other embodiments, the first electronic device 10 may include more or fewer components than those shown in the figure, or combine some components, or split some components, or have different component arrangements.

FIG. 12 is a schematic diagram of a hardware structure of a second electronic device 11 according to an embodiment of this application. As shown in FIG. 12, the second electronic device 11 may include a second processor 2001, a second memory 2002, a second communication bus 2003, and an in-vehicle display apparatus 2004. The second memory 2002 is configured to store one or more second computer programs 2005. The one or more second computer programs 2005 are configured to be executed by the second processor 2001. The one or more second computer programs 2005 include instructions, and the instructions may be used to perform the assisted driving method shown in FIG. 6 in the second electronic device 11.

It may be understood that the structure shown in this embodiment does not constitute a specific limitation on the second electronic device 11. In some other embodiments, the second electronic device 11 may include more or fewer components than those shown in the figure, or combine some components, or split some components, or have different component arrangements.

Both the first processor 1001 and the second processor 2001 may include one or more processing units. For example, the first processor 1001 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, a neural network processor (neural-network processing unit, NPU), and/or the like. Different processing units may be independent components, or may be integrated into one or more processors.

The first processor 1001 and the second processor 2001 may be further provided with a memory, configured to store instructions and data. In some embodiments, memories in the first processor 1001 and the second processor 2001 are caches. The memory may store instructions or data that is just used or cyclically used by the first processor 1001 (the second processor 2001). If the first processor 1001 (the second processor 2001) needs to use the instructions or the data again, the instructions or the data may be directly invoked from the memory. This avoids repeated access and reduces a waiting time of the first processor 1001 (the second processor 2001), thereby improving system efficiency.

In some embodiments, both the first processor 1001 and the second processor 2001 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

In some embodiments, both the first memory 1002 and the second memory 2002 may include a high-speed random access memory, and may further include a non-volatile memory, for example, a hard disk, a memory, a plug-in hard disk, a smart memory card (Smart Media Card, SMC), a secure digital (Secure Digital, SD) card, a flash card (Flash Card), at least one magnetic disk storage device, a flash memory device, or another volatile solid-state storage device.

An embodiment further provides a computer storage medium. The computer storage medium stores computer instructions. When the computer instructions are run on an electronic device, the electronic device is enabled to perform the foregoing related method steps to implement the assisted driving methods in the foregoing embodiments.

An embodiment further provides a computer program product. When the computer program product runs on a computer, the computer is enabled to perform the foregoing related steps, to implement the assisted driving methods in the foregoing embodiments.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, to enable a chip to perform the assisted driving methods in the foregoing method embodiments.

The first electronic device, the second electronic device, the computer storage medium, the computer program product, or the chip provided in embodiments is configured to perform the corresponding methods provided above. Therefore, for beneficial effects that can be achieved, refer to the beneficial effects of the corresponding methods provided above. Details are not described herein again.

The foregoing descriptions about implementations allow a person skilled in the art to understand that, for the purpose of convenient and brief description, division of the foregoing functional modules is taken as an example for illustration. During actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is an example. For example, division into modules or units is logical function division and may be another division manner in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1. An assisted driving method, wherein the method comprises:

   receiving, by a flying apparatus (200), a startup instruction from a vehicle (100), wherein the startup instruction is used to start the flying apparatus (200), and a camera is disposed on the flying apparatus (200);
   controlling, by the flying apparatus (200), the flying apparatus (200) to enter a self-test mode when power of the flying apparatus (200) meets a preset power requirement and a vehicle speed of the vehicle (100) meets a preset speed requirement;
   obtaining, by the flying apparatus (200), vehicle speed information of the vehicle (100) when the flying apparatus (200) succeeds in the self-test, wherein the flying apparatus (200) comprises a plurality of rotary wings, and that the flying apparatus (200) succeeds in the self-test comprises: each of the rotary wings rotates at a preset rotation speed in the self-test mode;
   obtaining, by the flying apparatus (200), information about a position of the flying apparatus (200) relative to the vehicle (100);
   controlling, by the flying apparatus (200), based on the vehicle speed information and the position information, the flying apparatus (200) to fly; and
   transmitting, by the flying apparatus (200), to the vehicle (100), a road condition image shot by the camera, wherein the vehicle (100) is provided with a parking slot (110) for parking the flying apparatus (200), an air blowing inlet (1125) is provided on a side wall (114) of the parking slot (110), and the method further comprises:

      when the flying apparatus (200) fails in the self-test, blowing air to the flying apparatus (200) by using the air blowing inlet (1125); or
      when the flying apparatus (200) succeeds in the self-test within a preset blowing time, obtaining, by the flying apparatus (200), the vehicle speed information of the vehicle (100); or
      when the flying apparatus (200) still fails in the self-test within the preset blowing time, outputting, by the flying apparatus (200), preset prompt information to the vehicle (100).

2. The assisted driving method according to claim 1, wherein the controlling the flying apparatus (200) to enter a self-test mode when power of the flying apparatus (200) meets a preset power requirement and a vehicle speed of a vehicle (100) meets a preset vehicle speed requirement comprises:

   when remaining power of the flying apparatus (200) is greater than preset power, the vehicle speed of the vehicle (100) is lower than a preset vehicle speed, and communication between the flying apparatus (200) and the vehicle (100) is normal, controlling the flying apparatus (200) to enter the self-test mode; or
   when remaining power of the flying apparatus (200) is greater than preset power, the vehicle speed of the vehicle (100) is lower than a preset vehicle speed, a rainfall in a flight environment of the flying apparatus (200) is less than a preset rainfall, and communication between the flying apparatus (200) and the vehicle (100) is normal, controlling the flying apparatus (200) to enter the self-test mode.

3. The assisted driving method according to claim 1 or 2, wherein the method further comprises:

   when the flying apparatus (200) and/or the vehicle (100) meet/meets a preset landing condition, controlling the flying apparatus (200) to enter a return-for-landing mode, wherein
   the preset landing condition comprises at least one of the following: the flying apparatus (200) receives a return instruction; the remaining power of the flying apparatus (200) is less than a preset threshold; the vehicle speed of the vehicle (100) is higher than the preset vehicle speed for a first preset time; the rainfall in the flight environment of the flying apparatus (200) is greater than the preset rainfall for a second preset time; and a communication exception occurs between the flying apparatus (200) and the vehicle (100) for a third preset time.

4. The assisted driving method according to claim 3, wherein the vehicle (100) is provided with a parking slot for parking the flying apparatus (200), and the controlling the flying apparatus (200) to enter a return-for-landing mode comprises:

   controlling the flying apparatus (200) to track a center point of the parking slot (110) by using the camera, and adjusting a speed and a position of the flying apparatus (200) in an X-axis direction and a speed and a position of the flying apparatus (200) in a Y-axis direction, so that the center point of the parking slot (110) is in a same vertical direction as a center point of the flying apparatus (200); and
   adjusting a flight height of the flying apparatus (200) to land in the parking slot (110).

5. The assisted driving method according to claim 1, wherein when the flying apparatus (200) succeeds in the self-test, the parking slot (110) is switched from a locked state to a loosened state.

6. The assisted driving method according to claim 1, wherein a vehicle coordinate system (S2) is defined for the vehicle (100), and the obtaining information about a position of the flying apparatus (200) relative to the vehicle (100) comprises:

obtaining a first actual distance of the flying apparatus (200) relative to a coordinate origin of the vehicle coordinate system (S2) in an X-axis direction, a second actual distance of the flying apparatus (200) relative to a coordinate origin of the vehicle coordinate system (S2) in a Y-axis direction, and a third actual distance of the flying apparatus (200) relative to a coordinate origin of the vehicle coordinate system (S2) in a Z-axis direction.

7. The assisted driving method according to claim 6, wherein a first target distance relative to the coordinate origin of the vehicle coordinate system (S2) in the X-axis direction, a second target distance relative to the coordinate origin of the vehicle coordinate system (S2) in the Y-axis direction, and a third target distance relative to the coordinate origin of the vehicle coordinate system (S2) in the Z-axis direction are set for the flying apparatus (200), and the controlling, based on the vehicle speed information and the position information, the flying apparatus (200) to fly comprises:

controlling, based on the vehicle speed information, a difference between the first target distance and the first actual distance, a difference between the second target distance and the second actual distance, and a difference between the third target distance and the third actual distance, the flying apparatus (200) to fly.

8. The assisted driving method according to claim 7, wherein the method further comprises:

setting the first target distance according to a vehicle speed, an acceleration, and a steering wheel rotation angle that are of the vehicle (100), wherein the first target distance is positively correlated with the vehicle speed and the acceleration of the vehicle (100), and the first target distance is negatively correlated with the steering wheel rotation angle of the vehicle (100); setting the second target distance according to a preset time constant and the vehicle speed, the acceleration, and the steering wheel rotation angle that are of the vehicle (100), wherein the second target distance is positively correlated with the vehicle speed and the acceleration of the vehicle (100), and the second target distance is negatively correlated with the steering wheel rotation angle of the vehicle (100); and when it is determined, based on the road condition image, that there is a height limit sign in front of the vehicle (100), setting the third target distance according to a height marked by the height limit sign and a preset safe height.

9. The assisted driving method according to claim 8, wherein the method further comprises:

when it is determined, based on the road condition image, that there is a height limit sign and an obstacle vehicle in front of the vehicle (100), setting the third target distance according to the height marked by the height limit sign and a height of the obstacle vehicle; or when it is determined, based on the road condition image, that there is an obstacle vehicle in front of the vehicle (100), setting the third target distance according to a height of the obstacle vehicle and the preset safe height; or when it is determined, based on the road condition image, that there is neither a height limit sign nor an obstacle vehicle in front of the vehicle (100), setting the third target distance as the preset safe height.

10. A computer-readable storage medium, wherein the computer-readable storage medium stores computer instructions, and when the computer instructions are run on a first electronic device (10) and a second electronic device (11), both the electronic devices are enabled to perform the assisted driving method according to any one of claims 1 to 9.

11. A chip, coupled to a memory in an electronic device, wherein the chip is configured to control the electronic device (10, 11) to perform the assisted driving method according to any one of claims 1 to 9.

12. A system comprising a first electronic device (10) at the flying apparatus and a second electronic device (11) at the vehicle wherein the first electronic device (10) and the second electronic device (11) comprise the chip according to claim 11, the chip comprises a processor (1001, 2001) and a memory (1002, 2002), the memory is configured to store instructions, and the processor (1001, 2001) is configured to invoke the instructions in the memory to enable the the first electronic device (10) and the second electronic device (11) to perform the assisted driving method according to any one of claims 1 to 9.

**Patentansprüche**

1. Unterstütztes Antriebsverfahren, wobei das Verfahren Folgendes umfasst:

Empfangen einer Startanweisung von einem Fahrzeug (100) durch eine Flugeinrichtung (200), wobei die Startanweisung zum Starten der Flugeinrichtung (200) verwendet wird und eine Kamera auf der Flugeinrichtung (200) angeordnet ist;

Steuern der Flugeinrichtung (200) durch die Flugeinrichtung (200), um in einen Selbsttestmodus zu wechseln, wenn die Leistung der Flugeinrichtung (200) eine voreingestellte Leistungsanforderung erfüllt und eine Fahrzeuggeschwindigkeit des Fahrzeugs (100) eine voreingestellte Geschwindigkeitsanforderung erfüllt;

Erlangen von Fahrzeuggeschwindigkeitsinformationen des Fahrzeugs (100) durch die Flugeinrichtung (200), wenn die Flugeinrichtung (200) den Selbsttest besteht, wobei die Flugeinrichtung (200) eine Vielzahl von Drehflügeln umfasst und der Umstand, dass die Flugeinrichtung (200) den Selbsttest besteht, Folgendes umfasst: jeder der Drehflügel dreht sich in dem Selbsttestmodus mit einer voreingestellten Drehgeschwindigkeit;

Erlangen von Informationen über eine Position der Flugeinrichtung (200) relativ zu dem Fahrzeug (100) durch die Flugeinrichtung (200);

Steuern des Flugs der Flugeinrichtung (200) durch die Flugeinrichtung (200) basierend auf den Fahrzeuggeschwindigkeitsinformationen und den Positionsinformationen; und

Übertragen eines durch die Kamera aufgenommenen Bildes des Straßenzustands durch die Flugeinrichtung (200) an das Fahrzeug (100), wobei das Fahrzeug (100) mit einem Parkplatz (110) zum Parken der Flugeinrichtung (200) versehen ist, ein Luftblaseinlass (1125) an einer Seitenwand (114) des Parkplatzes (110) bereitgestellt ist und das Verfahren ferner Folgendes umfasst:

wenn die Flugeinrichtung (200) den Selbsttest nicht besteht, Blasen von Luft in die Flugeinrichtung (200) unter Verwendung des Luftblaseinlasses (1125); oder

wenn die Flugeinrichtung (200) den Selbsttest innerhalb einer voreingestellten Blaszeit besteht, Erlangen der Fahrzeuggeschwindigkeitsinformationen des Fahrzeugs (100) durch die Flugeinrichtung (200); oder

wenn die Flugeinrichtung (200) den Selbsttest innerhalb der voreingestellten Blaszeit immer noch nicht besteht, Ausgeben voreingestellter Aufforderungsinformationen durch die Flugeinrichtung (200) an das Fahrzeug (100).

2. Unterstütztes Antriebsverfahren nach Anspruch 1, wobei das Steuern der Flugeinrichtung (200), um in einen Selbsttestmodus zu wechseln, wenn die Leistung der Flugeinrichtung (200) eine voreingestellte Leistungsanforderung erfüllt und eine Fahrzeuggeschwindigkeit eines Fahrzeugs (100) eine voreingestellte Fahrzeuggeschwindigkeitsanforderung erfüllt, Folgendes umfasst:

wenn die verbleibende Leistung der Flugeinrichtung (200) größer als die voreingestellte Leistung ist, die Fahrzeuggeschwindigkeit des Fahrzeugs (100) geringer als eine voreingestellte Fahrzeuggeschwindigkeit ist und die Kommunikation zwischen der Flugeinrichtung (200) und dem Fahrzeug (100) normal ist, Steuern der Flugeinrichtung (200), um in den Selbsttestmodus zu wechseln; oder

wenn eine verbleibende Leistung der Flugeinrichtung (200) größer als eine voreingestellte Leistung ist, die Fahrzeuggeschwindigkeit des Fahrzeugs (100) geringer als eine voreingestellte Fahrzeuggeschwindigkeit ist, ein Niederschlag in einer Flugumgebung der Flugeinrichtung (200) geringer als auch voreingestellter Niederschlag ist, und die Kommunikation zwischen der Flugeinrichtung (200) und dem Fahrzeug (100) normal ist, Steuern der Flugeinrichtung (200), um in den Selbsttestmodus zu wechseln.

3. Unterstütztes Antriebsverfahren nach Anspruch 1 oder 2, wobei das Verfahren ferner Folgendes umfasst:

wenn die Flugeinrichtung (200) und/oder das Fahrzeug (100) eine voreingestellte Landebedingung erfüllt/erfüllen, Steuern der Flugeinrichtung (200), um in einen Rückkehr-zur-Landung-Modus zu wechseln, wobei

die voreingestellte Landebedingung mindestens eines der Folgenden umfasst: die Flugeinrichtung (200) empfängt eine Rückkehranweisung; die verbleibende Leistung der Flugeinrichtung (200) ist niedriger als ein voreingestellter Schwellenwert; die Fahrzeuggeschwindigkeit des Fahrzeugs (100) ist für einen ersten voreingestellten Zeitpunkt höher als die voreingestellte Fahrzeuggeschwindigkeit; der Niederschlag in der Flugumgebung der Flugeinrichtung (200) ist für einen zweiten voreingestellten Zeitpunkt stärker als der voreingestellte Niederschlag; und für einen dritten voreingestellten Zeitpunkt tritt eine Kommunikationsausnahme zwischen der Flugeinrichtung (200) und dem Fahrzeug (100) auf.

4. Unterstütztes Antriebsverfahren nach Anspruch 3, wobei das Fahrzeug (100) mit einem Parkplatz zum Parken der Flugeinrichtung (200) versehen ist und das Steuern der Flugeinrichtung (200), um in einen Rückkehr-zur-Landung-Modus zu gelangen, Folgendes umfasst:

Steuern der Flugeinrichtung (200), um einen Mittelpunkt des Parkplatzes (110) unter Verwendung der Kamera zu verfolgen, und Einstellen einer Geschwindigkeit und einer Position der Flugeinrichtung (200) in einer X-Achsenrichtung und einer Geschwindigkeit und einer Position der Flugeinrichtung (200) in einer Y-Achsenrichtung, sodass der Mittelpunkt des Parkplatzes (110) in derselben vertikalen Richtung wie ein Mittelpunkt der Flugeinrichtung (200) liegt; und Einstellen einer Flughöhe der Flugeinrichtung (200), um auf dem Parkplatz (110) zu landen.

5. Unterstütztes Antriebsverfahren nach Anspruch 1, wobei, wenn die Flugeinrichtung (200) den Selbsttest besteht, der Parkplatz (110) von einem gesperrten Zustand in einen gelösten Zustand umgeschaltet wird.

6. Unterstütztes Antriebsverfahren nach Anspruch 1, wobei ein Fahrzeugkoordinatensystem (S2) für das Fahrzeug (100) definiert ist und das Erlangen von Informationen über eine Position der Flugeinrichtung (200) relativ zu dem Fahrzeug (100) Folgendes umfasst:

Erlangen einer ersten tatsächlichen Distanz der Flugeinrichtung (200) relativ zu einem Koordinatenursprung des Fahrzeugkoordinatensystems (S2) in einer X-Achsenrichtung, einer zweiten tatsächlichen Distanz der Flugeinrichtung (200) relativ zu einem Koordinatenursprung des Fahrzeugkoordinatensystems (S2) in einer Y-Achsenrichtung und einer dritten tatsächlichen Distanz der Flugeinrichtung (200) relativ zu einem Koordinatenursprung des Fahrzeugkoordinatensystems (S2) in einer Z-Achsenrichtung.

7. Unterstütztes Antriebsverfahren nach Anspruch 6, wobei eine erste Zieldistanz relativ zu dem Koordinatenursprung des Fahrzeugkoordinatensystems (S2) in X-Achsenrichtung, eine zweite Zieldistanz relativ zu dem Koordinatenursprung des Fahrzeugkoordinatensystems (S2) in Y-Achsenrichtung und eine dritte Zieldistanz relativ zu dem Koordinatenursprung des Fahrzeugkoordinatensystems (S2) in der Z-Achsenrichtung für die Flugeinrichtung (200) festgelegt werden, und das Steuern des Flugs der Flugeinrichtung (200) basierend auf den Fahrzeuggeschwindigkeitsinformationen und den Positionsinformationen Folgendes umfasst:

Steuern des Flugs der Flugeinrichtung (200) basierend auf den Fahrzeuggeschwindigkeitsinformationen, einer Differenz zwischen der ersten Zieldistanz und der ersten tatsächlichen Distanz, einer Differenz zwischen der zweiten Zieldistanz und der zweiten tatsächlichen Distanz und einer Differenz zwischen der dritten Zieldistanz und der dritten tatsächlichen Distanz.

8. Unterstütztes Antriebsverfahren nach Anspruch 7, wobei das Verfahren ferner Folgendes umfasst:

Festlegen der ersten Zieldistanz gemäß einer Fahrzeuggeschwindigkeit, einer Beschleunigung und eines Lenkraddrehwinkels des Fahrzeugs (100), wobei die erste Zieldistanz positiv mit der Fahrzeuggeschwindigkeit und der Beschleunigung des Fahrzeugs (100) korreliert und die erste Zieldistanz negativ mit dem Lenkraddrehwinkel des Fahrzeugs (100) korreliert; Festlegen der zweiten Zieldistanz gemäß einer voreingestellten Zeitkonstante und der Fahrzeuggeschwindigkeit, der Beschleunigung und des Lenkraddrehwinkels des Fahrzeugs (100), wobei die zweite Zieldistanz positiv mit der Fahrzeuggeschwindigkeit und der Beschleunigung des Fahrzeugs (100) korreliert und die zweite Zieldistanz negativ mit dem Lenkraddrehwinkel des Fahrzeugs (100) korreliert; und wenn basierend auf dem Straßenzustandsbild bestimmt wird, dass sich vor dem Fahrzeug (100) ein Höhenbegrenzungsschild befindet, Festlegen der dritten Zieldistanz gemäß einer durch das Höhenbegrenzungsschild gekennzeichneten Höhe und einer voreingestellten sicheren Höhe.

9. Unterstütztes Antriebsverfahren nach Anspruch 8, wobei das Verfahren ferner Folgendes umfasst:

wenn basierend auf dem Straßenzustandsbild bestimmt wird, dass sich vor dem Fahrzeug (100) ein Höhenbegrenzungsschild und ein Hindernisfahrzeug befindet, Festlegen der dritten Zieldistanz gemäß der durch das Höhenbegrenzungsschild gekennzeichneten Höhe und einer Höhe des Hindernisfahrzeugs; oder wenn basierend auf dem Straßenzustandsbild bestimmt wird, dass sich vor dem Fahrzeug (100) ein Hindernisfahrzeug befindet, Festlegen der dritten Zieldistanz gemäß einer Höhe des Hindernisfahrzeugs und der voreingestellten sicheren Höhe; oder wenn basierend auf dem Straßenzustandsbild bestimmt wird, dass sich vor dem Fahrzeug (100) weder ein Höhenbegrenzungsschild noch ein Hindernisfahrzeug befindet, die dritte Zieldistanz als voreingestellte sichere Höhe festgelegt wird.

10. Computerlesbares Speichermedium, wobei das computerlesbare Speichermedium Computeranweisungen speichert und, wenn die Computeranweisungen auf einer ersten elektronischen Vorrichtung (10) und einer zweiten elektronischen Vorrichtung (11) ausgeführt werden, beide elektronischen Vorrichtungen in der Lage sind, das unterstützte Antriebsverfahren nach einem der Ansprüche 1 bis 9 durchzuführen.

11. Chip, der mit einem Speicher in einer elektronischen Vorrichtung gekoppelt ist, wobei der Chip dazu konfiguriert ist, die elektronische Vorrichtung (10, 11) zu steuern, um das unterstützte Antriebsverfahren nach einem der Ansprüche 1 bis 9 durchzuführen.

12. System, umfassend eine erste elektronische Vorrichtung (10) an der Flugeinrichtung und eine zweite elektronische Vorrichtung (11) an dem Fahrzeug, wobei die erste elektronische Vorrichtung (10) und die zweite elektronische Vorrichtung (11) den Chip nach Anspruch 11 umfassen, der Chip einen Prozessor (1001, 2001) und einen Speicher (1002, 2002) umfasst, der Speicher zum Speichern von Anweisungen konfiguriert ist und der Prozessor (1001, 2001) zum Aufrufen der Anweisungen in dem Speicher konfiguriert ist, um die erste elektronische Vorrichtung (10) und die zweite elektronische Vorrichtung (11) in die Lage zu versetzen, das unterstützte Antriebsverfahren nach einem der Ansprüche 1 bis 9 durchzuführen.

## Revendications

1. Procédé de conduite assistée, dans lequel le procédé comprend :

la réception, par un appareil volant (200), d'une instruction de démarrage provenant d'un véhicule (100), dans lequel l'instruction de démarrage est utilisée pour démarrer l'appareil volant (200), et une caméra est disposée sur l'appareil volant (200) ;
la commande, par l'appareil volant (200), à l'appareil volant (200) d'entrer dans un mode d'auto-test lorsque la puissance de l'appareil volant (200) satisfait à une exigence de puissance prédéfinie et une vitesse de véhicule du véhicule (100) satisfait à une exigence de vitesse prédéfinie ;
l'obtention, par l'appareil volant (200), d'informations de vitesse de véhicule du véhicule (100) lorsque l'appareil volant (200) réussit l'auto-test, dans lequel l'appareil volant (200) comprend une pluralité d'ailes tournantes, et le fait que l'appareil volant (200) réussit l'auto-test comprend : le fait que chacune des ailes tournantes tourne à une vitesse de rotation prédéfinie dans le mode d'auto-test ;

l'obtention, par l'appareil volant (200), d'informations sur une position de l'appareil volant (200) par rapport au véhicule (100) ;
la commande, par l'appareil volant (200), sur la base des informations de vitesse de véhicule et des informations de position, à l'appareil volant (200) de voler ; et
la transmission, par l'appareil volant (200), au véhicule (100), d'une image d'état de route prise par la caméra, dans lequel le véhicule (100) est pourvu d'un emplacement de stationnement (110) pour le stationnement de l'appareil volant (200), une entrée de soufflage d'air (1125) est prévue sur une paroi latérale (114) de l'emplacement de stationnement (110), et le procédé comprend également :

lorsque l'appareil volant (200) échoue dans l'auto-test, le soufflage d'air vers l'appareil volant (200) en utilisant l'entrée de soufflage d'air (1125) ; ou
lorsque l'appareil volant (200) réussit l'auto-test dans un délai de soufflage prédéfini, l'obtention, par l'appareil volant (200), des informations de vitesse de véhicule du véhicule (100) ; ou
lorsque l'appareil volant (200) échoue toujours dans l'auto-test dans le délai de soufflage prédéfini, l'émission, par l'appareil volant (200), d'informations d'invite prédéfinies vers le véhicule (100).

2. Procédé de conduite assistée selon la revendication 1, dans lequel la commande à l'appareil volant (200) de passer en mode d'auto-test lorsque la puissance de l'appareil volant (200) satisfait à une exigence de puissance prédéfinie et que la vitesse de véhicule d'un véhicule (100) satisfait à une exigence de vitesse prédéfinie comprend :

lorsque la puissance restante de l'appareil volant (200) est supérieure à la puissance prédéfinie, que la vitesse de véhicule du véhicule (100) est inférieure à une vitesse prédéfinie, et que la communication entre l'appareil volant (200) et le véhicule (100) est normale, la commande à l'appareil volant (200) de passer en mode auto-test ; ou
lorsque la puissance restante de l'appareil volant (200) est supérieure à la puissance prédéfinie, que la vitesse de véhicule du véhicule (100) est inférieure à une vitesse de véhicule prédéfinie, que des précipitations dans un environnement de vol de l'appareil volant (200) sont inférieures à des précipitations prédéfinies, et que la communication entre l'appareil volant (200) et le véhicule (100) est normale, la commande à l'appareil volant (200) de passer en mode auto-test.

3. Procédé de conduite assistée selon la revendication 1 ou 2, dans lequel le procédé comprend également :

lorsque l'appareil volant (200) et/ou le véhicule (100) satisfont à une condition d'atterrissage prédéfinie, la commande à l'appareil volant (200) d'entrer dans un mode de retour pour atterrissage, dans lequel
la condition d'atterrissage prédéfinie comprend au moins l'un des éléments suivants : l'appareil volant (200) reçoit une instruction de retour ; la puissance restante de l'appareil volant (200) est inférieure à un seuil prédéfini ; la vitesse de véhicule du véhicule (100) est supérieure à la vitesse de véhicule prédéfinie pendant une première durée prédéfinie ; les précipitations dans l'environnement de vol de l'appareil volant (200) sont supérieures aux précipitations prédéfinies pendant une deuxième durée prédéfinie ; et une exception de communication se produit entre l'appareil volant (200) et le véhicule (100) pendant une troisième durée prédéfinie.

4. Procédé de conduite assistée selon la revendication 3, dans lequel le véhicule (100) est pourvu d'un emplacement de stationnement pour le stationnement de l'appareil volant (200), et la commande à l'appareil volant (200) de passer en mode retour pour atterrissage comprend :

la commande à l'appareil volant (200) de suivre un point central de l'emplacement de stationnement (110) en utilisant la caméra, et le réglage d'une vitesse et d'une position de l'appareil volant (200) dans une direction d'axe X et d'une vitesse et d'une position de l'appareil volant (200) dans une direction d'axe Y, de sorte que le point central de l'emplacement de stationnement (110) est dans une même direction verticale qu'un point central de l'appareil volant (200) ; et
la réglage d'une hauteur de vol de l'appareil volant (200) pour atterrir dans l'emplacement de stationnement (110).

5. Procédé de conduite assistée selon la revendication 1, dans lequel lorsque l'appareil volant (200) réussit l'auto-test, l'emplacement de stationnement (110) passe d'un état verrouillé à un état libre.

6. Procédé de conduite assistée selon la revendication 1, dans lequel un système de coordonnées de véhicule (S2) est défini pour le véhicule (100), et l'obtention d'informations sur une position de l'appareil volant (200) par rapport au véhicule (100) comprend :
l'obtention d'une première distance réelle de l'appareil volant (200) par rapport à une origine de coordonnées du système de coordonnées de véhicule (S2) dans une direction d'axe X, d'une deuxième distance réelle de l'appareil volant (200) par rapport à une origine de coordonnées du système de coordonnées de véhicule (S2) dans une direction d'axe Y, et d'une troisième distance réelle de l'appareil volant (200) par rapport à une origine de coordonnées du système de coordonnées de véhicule (S2) dans une direction d'axe Z.

7. Procédé de conduite assistée selon la revendication 6, dans lequel une première distance cible par rapport à l'origine de coordonnées du système de coordonnées de véhicule (S2) dans la direction d'axe X, une deuxième distance cible par rapport à l'origine de coordonnées du système de coordonnées de véhicule (S2) dans la direction d'axe Y, et une troisième distance cible par rapport à l'origine de coordonnées du système de coordonnées de véhicule (S2) dans la direction d'axe Z sont définies pour l'appareil volant (200), et la commande, sur la base des informations de vitesse de véhicule et des informations de position, à l'appareil volant (200) de voler comprend :
la commande, sur la base des informations de vitesse de véhicule, d'une différence entre la première distance cible et la première distance réelle, d'une différence entre la deuxième distance cible et la deuxième distance réelle, et d'une différence entre la troisième distance cible et la troisième distance réelle, à l'appareil volant (200) de voler.

8. Procédé de conduite assistée selon la revendication 7, dans lequel le procédé comprend également :

la définition de la première distance cible selon une vitesse de véhicule, une accélération, et un angle de rotation de volant qui sont ceux du véhicule (100), dans lequel la première distance cible est positivement corrélée à la vitesse de véhicule et à l'accélération du véhicule (100), et la première distance cible est négativement corrélée à l'angle de rotation de volant du véhicule (100) ;
la définition de la deuxième distance cible selon une constante de temps prédéfinie et la vitesse de véhicule, l'accélération, et l'angle de rotation de volant qui sont ceux du véhicule (100), dans lequel la deuxième distance cible est positivement corrélée à la vitesse de véhicule et à l'accélération du véhicule (100), et la deuxième distance cible est négativement corrélée à l'angle de rotation de volant du véhicule (100) ; et
lorsqu'il est déterminé, sur la base de l'image d'état de route, qu'il y a un panneau de limite de hauteur devant le véhicule (100), la définition de la troisième distance cible selon une hauteur marquée par le panneau de limite de hauteur et une hauteur de sécurité prédéfinie.

9. Procédé de conduite assistée selon la revendication 8, dans lequel le procédé comprend également :

lorsqu'il est déterminé, sur la base de l'image d'état de route, qu'il y a un panneau de limite de hauteur et un véhicule obstacle devant le véhicule (100), la définition de la troisième distance cible selon la hauteur marquée par le panneau de limite de hauteur et une hauteur du véhicule obstacle ; ou

lorsqu'il est déterminé, sur la base de l'image d'état de route, qu'il y a un véhicule obstacle devant le véhicule (100), la définition de la troisième distance cible selon la hauteur du véhicule obstacle et la hauteur de sécurité prédéfinie ; ou

lorsqu'il est déterminé, sur la base de l'image d'état de route, qu'il n'y a ni panneau de limite de hauteur ni véhicule obstacle devant le véhicule (100), la définition de la troisième distance cible comme hauteur de sécurité prédéfinie.

10. Support de stockage lisible par ordinateur, dans lequel le support de stockage lisible par ordinateur stocke des instructions informatiques, et lorsque les instructions informatiques sont exécutées sur un premier dispositif électronique (10) et un second dispositif électronique (11), les deux dispositifs électroniques sont activés pour réaliser le procédé de conduite assistée selon l'une quelconque des revendications 1 à 9.

11. Puce, couplée à une mémoire dans un dispositif électronique, dans laquelle la puce est configurée pour commander le dispositif électronique (10, 11) pour réaliser le procédé de conduite assistée selon l'une quelconque des revendications 1 à 9.

12. Système comprenant un premier dispositif électronique (10) au niveau de l'appareil volant et un second dispositif électronique (11) au niveau du véhicule dans lequel le premier dispositif électronique (10) et le second dispositif électronique (11) comprennent la puce selon la revendication 11, la puce comprend un processeur (1001, 2001) et une mémoire (1002, 2002), la mémoire est configurée pour stocker des instructions, et le processeur (1001, 2001) est configuré pour appeler les instructions dans la mémoire pour permettre au premier dispositif électronique (10) et au second dispositif électronique (11) de réaliser le procédé de conduite assistée selon l'une quelconque des revendications 1 à 9.

FIG. 1

FIG. 2

100

200

| Vehicle | | Flying apparatus |

30: Send a startup instruction

31: Obtain vehicle speed information

32: Obtain position information

33: Control, based on the vehicle speed information and the position information, the flying apparatus to fly

34: Transmit a road condition image

35: Perform coordinate transformation to obtain a first image

36: Perform coordinate transformation to obtain a second image

37: Display the second image

38: Enter a return-for-landing mode

FIG. 3

| Flying apparatus coordinate system S1 | | Vehicle coordinate system S2 |

| A coordinate position of a target object A1 is $S_{1,obj}(x_i, y_i, z_i)$ | | An actual position of a flying apparatus is $S_{2,real}(x_1, y_1, z_1)$ |

The coordinate position of the target object A1 is $S_{2,real}(x_1, y_1, z_1) + S_{1,obj}(x_i, y_i, z_i)$

FIG. 4

Receive a startup instruction, where the startup instruction is used to start a flying apparatus ⟋ 500

When power of the flying apparatus meets a preset power requirement and a vehicle speed of a vehicle meets a preset vehicle speed requirement, control the flying apparatus to enter a self-test mode ⟋ 502

When the flying apparatus succeeds in the self-test, obtain vehicle speed information of the vehicle ⟋ 504

Obtain information about a position of the flying apparatus relative to the vehicle ⟋ 506

Control, based on the vehicle speed information and the position information, the flying apparatus to fly ⟋ 508

Transmit, to the vehicle, a road condition image shot by a camera ⟋ 510

When the flying apparatus and/or the vehicle meet/meets a preset landing condition, control the flying apparatus to enter a return-for-landing mode ⟋ 512

FIG. 5

Send a startup instruction to a flying apparatus, where the startup instruction is used to start the flying apparatus — 600

Receive a road condition image that is transmitted by the flying apparatus and that is shot by a camera — 602

Perform coordinate transformation on the road condition image, and display the road condition image on an in-vehicle display apparatus of a vehicle — 604

Obtain information about a position of the flying apparatus relative to the vehicle — 606

Control, based on the position information, the flying apparatus to fly — 608

When the flying apparatus and/or the vehicle meet/meets a preset landing condition, control the flying apparatus to enter a return-for-landing mode — 610

FIG. 6

FIG. 7

Vehicle coordinate system S2

An actual position of a flying apparatus is $S_{2,real}(x_1, y_1, z_1)$, and a target position of the flying apparatus is $S_{2,des}(x_{des}, y_{des}, z_{des})$

Calculate control values for the flying apparatus in an X-axis direction, a Y-axis direction, and a Z-axis direction according to $S_{2,des}(x_{des}, y_{des}, z_{des})-S_{2,real}(x_1, y_1, z_1)$

FIG. 8

300

First assisted driving apparatus

First receiving module — 301

First control module — 302

First obtaining module — 303

Second control module — 304

Transmission module — 305

FIG. 9

400

Second assisted driving apparatus

Sending module — 401

Second receiving module — 402

Transformation module — 403

Second obtaining module — 404

Third control module — 405

FIG. 10

10

First electronic device

1004 — Camera

1003

1001

First processor

1005

First computer program

1002 — First memory

FIG. 11

11

Second electronic device

2004 — In-vehicle display apparatus

2003

2001

Second processor

2005

Second computer program

2002 — Second memory

FIG. 12

**EP 4 296 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111627256 A
- CN 105512628 A
- EP 3246776 A1
- US 2016244187 A1
- US 2020130864 A1
- US 2020407057 A1